# EUROPÄISCHE PATENTSCHRIFT

(11) **EP 2 881 879 B1**
(45) Veröffentlichungstag und Bekanntmachung des Hinweises auf die Patenterteilung: **13.02.2019**
(21) Anmeldenummer: 14196348.8
(22) Anmeldetag: 04.12.2014
(51) Int. Cl.: G06F 21/33, G06F 21/34, G06Q 30/06

(54) **Verfahren zum Authentifizieren einer Person**
Method for authenticating a person
Procédé d'authentification d'une personne

(30) Priorität: 06.12.2013 DE 102013113666
(43) Veröffentlichungstag der Anmeldung: 10.06.2015
(73) Patentinhaber: Bundesdruckerei GmbH, 10958 Berlin (DE)
(72) Erfinder: Schröder, Martin, 12437 Berlin (DE); Morgner, Frank, 15537 Grünheide (DE); Dietrich, Frank, 12437 Berlin (DE)
(74) Vertreter: Patentship Patentanwaltsgesellschaft mbH

(56) Entgegenhaltungen:
- EP-A1- 2 631 836
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- "Technical Guideline TR-03112-7 eCard-API-Framework - Protocols", , 7. Oktober 2011 (2011-10-07), Seiten 1-94, XP055059410, Gefunden im Internet: URL:ttps://www.bsi.bund.de/DE/Publikatione n/TechnischeRichtlinien/technischerichtlin ien_node.html [gefunden am 2013-04-12]
- Michael Kröger: "Carsharing im Alltagstest - SPIEGEL ONLINE", , 31. Januar 2013 (2013-01-31), XP055184363, Gefunden im Internet: URL:http://www.spiegel.de/auto/fahrkultur/ carsharing-im-alltagstest-a-861884.html [gefunden am 2015-04-20]
- Anonymous: "Was Polizisten bei Kontrollen gar nicht mögen | law blog", , 19. April 2011 (2011-04-19), XP055184364, Gefunden im Internet: URL:https://www.lawblog.de/index.php/archi ves/2011/04/19/was-polizisten-bei-kontroll en-gar-nicht-mgen/ [gefunden am 2015-04-20]
- Detlef Borchers: "Grobkonzept des elektronischen Personalausweises steht [Update] | heise online", , 3. Juli 2008 (2008-07-03), XP055184467, Gefunden im Internet: URL:http://www.heise.de/newsticker/meldung /Grobkonzept-des-elektronischen-Personalau sweises-steht-Update-183592.html [gefunden am 2015-04-21]

## Beschreibung

Die vorliegende Erfindung betrifft das Gebiet des Authentifizierens einer Person.

Verfahren zum Authentifizieren einer Person werden üblicherweise eingesetzt, um einem eingeschränkten und vordefinierten Personenkreis eine Nutzungsberechtigung für ein System oder eine Zugangsberechtigung für ein System einzuräumen.

Das Authentifizieren der Person kann dabei beispielsweise mittels einer Authentifizierungskarte der Person und/oder mittels eines Passwortes der Person erfolgen. Zum Auslesen der Authentifizierungskarte und/oder zur Eingabe des Passwortes werden üblicherweise Terminals eingesetzt, welche über ein Lesegerät und/oder ein Tastenfeld verfügen können.

Entsprechende Terminals sind dabei zumeist ortsfest installiert bzw. ortsfest eingerichtet. Zudem erweisen sich entsprechende Terminals zumeist als groß und unhandlich. Der Einsatz dieser Terminals ist daher auf wenige spezielle Anwendungen beschränkt.

Die EP 2631836 betrifft ein computer-implementiertes Verfahren für Nutzungskontrolle von mobilen Gegenständen.

Es ist daher die Aufgabe der vorliegenden Erfindung, ein effizientes und flexibles Konzept zum Authentifizieren einer Person zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch die Verwendung eines elektronisch auslesbaren Identifikationsdokumentes gelöst werden kann.

Gemäß einem ersten Aspekt betrifft die Erfindung ein Verfahren zum Authentifizieren einer Person unter Verwendung eines elektronisch auslesbaren Identifikationsdokumentes, mit: Aufbauen einer ersten Kommunikationsverbindung zwischen einem Kommunikationsgerät und dem Identifikationsdokument; Aufbauen einer zweiten Kommunikationsverbindung zwischen einem Identifizierungsserver und dem Kommunikationsgerät; Auslesen einer elektronischen Identifikation aus dem Identifikationsdokument durch den Identifizierungsserver über die erste Kommunikationsverbindung und die zweite Kommunikationsverbindung; und Vergleichen der ausgelesenen elektronischen Identifikation mit einer vorgespeicherten elektronischen Identifikation, um die Person zu authentifizieren. Dadurch wird der Vorteil erreicht, dass das Authentifizieren der Person effizient durchgeführt werden kann.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren integrierten Schaltkreis, beispielsweise einen Radio Frequency Identification (RFID) Chip, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die elektronische Identifikation kann durch eine Folge von Buchstaben, Ziffern, Bytes und/oder Symbolen gebildet sein. Die elektronische Identifikation kann eine persönliche Angabe über eine Person, beispielsweise einen Namen, und/oder eine Kennung des Identifikationsdokumentes, beispielsweise eine Seriennummer, umfassen. Die elektronische Identifikation kann ferner durch das Identifikationsdokument erzeugt und/oder gespeichert werden.

Der Identifizierungsserver kann ausgebildet sein, die elektronische Identifikation aus dem Identifikationsdokument auszulesen. Der Identifizierungsserver kann ferner ausgebildet sein, die Echtheit des Identifikationsdokumentes zu verifizieren. Der Identifizierungsserver kann ein eID-Server bzw. ein elektronischer Identifizierungsserver sein.

Das Kommunikationsgerät kann ausgebildet sein, die erste Kommunikationsverbindung zu dem Identifikationsdokument aufzubauen und die zweite Kommunikationsverbindung zu dem Identifizierungsserver aufzubauen. Das Kommunikationsgerät kann tragbar bzw. mobil sein. Das Kommunikationsgerät kann ferner ausgebildet sein, die elektronische Identifikation von dem Identifikationsdokument über die erste Kommunikationsverbindung und die zweite Kommunikationsverbindung an den Identifizierungsserver weiterzuleiten.

Die erste Kommunikationsverbindung kann drahtgebunden und/oder drahtlos sein. Die erste Kommunikationsverbindung kann ferner über ein Kommunikationsnetzwerk aufgebaut sein. Die erste Kommunikationsverbindung kann ferner authentifiziert und/oder verschlüsselt sein.

Die zweite Kommunikationsverbindung kann drahtgebunden und/oder drahtlos sein. Die zweite Kommunikationsverbindung kann ferner über ein Kommunikationsnetzwerk aufgebaut sein. Die zweite Kommunikationsverbindung kann ferner authentifiziert und/oder verschlüsselt sein.

Das Kommunikationsnetzwerk kann durch eine Anordnung einer Mehrzahl von Servern, Clients und/oder Computern in Form eines Local Area Network (LAN), eines Wireless Local Area Network (WLAN) oder des Internet gebildet sein.

Das Aufbauen der ersten Kommunikationsverbindung kann einen Austausch und/oder eine Übertragung kryptographischer Schlüssel und/oder kryptographischer Zertifikate zwischen dem Kommunikationsgerät und dem Identifikationsdokument umfassen.

Das Aufbauen der zweiten Kommunikationsverbindung kann einen Austausch und/oder eine Übertragung kryptographischer Schlüssel und/oder kryptographischer Zertifikate zwischen dem Identifizierungsserver und dem Kommunikationsgerät umfassen.

Das Auslesen der elektronischen Identifikation aus dem Identifikationsdokument durch den Identifizierungsserver über die erste Kommunikationsverbindung und die zweite Kommunikationsverbindung kann einen Austausch und/oder eine Übertragung von kryptographischen Schlüsseln und/oder kryptographischen Zertifikaten zwischen dem Identifikationsdokument und dem Identifizierungsserver umfassen. Ferner kann das Auslesen der elektronischen Identifikation eine Verifikation der Echtheit des Identifikationsdokumentes und/oder der elektronischen Identifikation umfassen.

Das Vergleichen der ausgelesenen elektronischen Identifikation mit einer vorgespeicherten elektronischen Identifikation kann ein Bestimmen einer Übereinstimmung der ausgelesenen elektronischen Identifikation mit einer vorgespeicherten elektronischen Identifikation umfassen. Eine Übereinstimmung der ausgelesenen elektronischen Identifikation mit einer vorgespeicherten elektronischen Identifikation kann vorliegen, wenn die ausgelesene elektronische Identifikation und die vorgespeicherte elektronische Identifikation identisch sind. Das Vergleichen der ausgelesenen elektronischen Identifikation mit einer vorgespeicherten elektronischen Identifikation kann ferner ein Vergleichen der ausgelesenen elektronischen Identifikation mit einer Mehrzahl vorgespeicherter elektronischer Identifikationen umfassen, welche in einem Speicher und/oder in einer Datenbank abgelegt sein können.

Eine erfolgreiche Authentifizierung der Person kann bei Übereinstimmung zwischen der ausgelesenen elektronischen Identifikation und einer vorgespeicherten elektronischen Identifikation vorliegen.

Gemäß einer Ausführungsform wird das Aufbauen der ersten Kommunikationsverbindung zwischen dem Kommunikationsgerät und dem Identifikationsdokument mittels eines passwortauthentifizierten Verbindungsaufbauprotokolls, beispielsweise eines Password Authenticated Connection Establishment Protokolls, durchgeführt. Dadurch wird der Vorteil erreicht, dass eine authentifizierte und/oder verschlüsselte Kommunikationsverbindung aufgebaut werden kann.

Das passwortauthentifizierte Verbindungsaufbauprotokoll kann eine Eingabe eines Passwortes sowie einen Austausch und/oder eine Übertragung kryptographischer Schlüssel und/oder kryptographischer Zertifikate umfassen. Das passwortauthentifizierte Verbindungsaufbauprotokoll kann auf einem Diffie-Hellman-Schlüsselaustauschverfahren basieren. Das Passwort kann beispielsweise mittels eines Tastenfeldes des Kommunikationsgerätes eingegeben werden. Ferner kann das Passwort mittels eines Bildschirmes des Kommunikationsgerätes angezeigt werden.

Das Password Authenticated Connection Establishment (PACE) Protokoll kann beispielsweise gemäß der technischen Richtlinie BSI TR-03110 realisiert werden.

Gemäß einer Ausführungsform wird das Aufbauen der ersten Kommunikationsverbindung zwischen dem Kommunikationsgerät und dem Identifikationsdokument über eine drahtlose Funkkommunikationsverbindung, beispielsweise eine Wireless Local Area Network Funkverbindung oder eine Near Field Communication Funkverbindung oder eine Bluetooth Funkverbindung, durchgeführt. Dadurch wird der Vorteil erreicht, dass etablierte drahtlose Funkkommunikationsstandards für die erste Kommunikationsverbindung eingesetzt werden können.

Die drahtlose Funkkommunikationsverbindung kann für einen Austausch und/oder eine Übertragung analoger und/oder digitaler Informationen ausgebildet sein. Die drahtlose Funkkommunikationsverbindung kann ein Aussenden, ein Übertragen, sowie ein Empfangen elektromagnetischer Wellen umfassen. Die drahtlose Funkkommunikationsverbindung kann beispielsweise mittels einer Funkkommunikationsschnittstelle des Kommunikationsgerätes aufgebaut werden.

Die Wireless Local Area Network (WLAN) Funkverbindung kann beispielsweise auf dem IEEE 802.11 Funkkommunikationsstandard basieren. Die Near Field Communication (NFC) Funkverbindung kann beispielsweise auf den ISO/IEC 18092 bzw. ECMA-340 und/oder ISO/IEC 21481 bzw. ECMA-352 Funkkommunikationsstandards basieren. Die Bluetooth (BT) Funkverbindung kann beispielsweise auf dem IEEE 802.15.1 Funkkommunikationsstandard basieren.

Gemäß einer Ausführungsform wird das Aufbauen der zweiten Kommunikationsverbindung zwischen dem Identifizierungsserver und dem Kommunikationsgerät mittels eines Transportschichtsicherheitsprotokolls, beispielsweise eines Transport Layer Security Protokolls, durchgeführt. Dadurch wird der Vorteil erreicht, dass eine authentifizierte und/oder verschlüsselte Kommunikationsverbindung aufgebaut werden kann.

Das Transportschichtsicherheitsprotokoll kann einen Austausch und/oder eine Übertragung kryptographischer Schlüssel und/oder kryptographischer Zertifikate umfassen. Das Transportschichtsicherheitsprotokoll kann auf einem Diffie-Hellman-Schlüsselaustauschverfahren basieren.

Das Transport Layer Security (TLS) Protokoll kann beispielsweise auf den Standards IETF RFC 5246 und/oder IETF RFC 6176 basieren.

Gemäß einer Ausführungsform wird das Aufbauen der zweiten Kommunikationsverbindung zwischen dem Identifizierungsserver und dem Kommunikationsgerät über eine drahtlose Funkkommunikationsverbindung, beispielsweise eine Global System for Mobile Communications Mobilfunkverbindung oder eine Universal Mobile Telecommunications System Mobilfunkverbindung oder eine Long Term Evolution Mobilfunkverbindung, durchgeführt. Dadurch wird der Vorteil erreicht, dass etablierte drahtlose Funkkommunikationsstandards für die zweite Kommunikationsverbindung eingesetzt werden können.

Die drahtlose Funkkommunikationsverbindung kann für einen Austausch und/oder eine Übertragung analoger und/oder digitaler Informationen ausgebildet sein. Die drahtlose Funkkommunikationsverbindung kann ein Aussenden, ein Übertragen, sowie ein Empfangen elektromagnetischer Wellen umfassen. Die drahtlose Funkkommunikationsverbindung kann beispielsweise mittels einer Funkkommunikationsschnittstelle des Kommunikationsgerätes aufgebaut werden.

Die Global System for Mobile Communications (GSM) Mobilfunkverbindung kann beispielsweise auf den ETSI/3GPP Mobilfunkstandards basieren. Die Universal Mobile Telecommunications System (UMTS) Mobilfunkverbindung kann beispielsweise auf den ETSI/3GPP Mobilfunkstandards basieren. Die Long Term Evolution (LTE) Mobilfunkverbindung kann beispielsweise auf den ETSI/3GPP Mobilfunkstandards basieren.

Gemäß einer Ausführungsform umfasst das elektronisch auslesbare Identifikationsdokument einen integrierten Schaltkreis, wobei das Auslesen der elektronischen Identifikation das Durchführen eines Chipauthentifizierungsverfahrens, beispielsweise eines Chip Authentication Verfahrens, zur Authentifizierung des integrierten Schaltkreises des Identifikationsdokumentes umfasst. Dadurch wird der Vorteil erreicht, dass die Authentizität bzw. Echtheit des integrierten Schaltkreises des Identifikationsdokumentes verifiziert werden kann.

Der integrierte Schaltkreis kann elektronisch auslesbar sein. Der integrierte Schaltkreis kann beispielsweise ein Radio Frequency Identification (RFID) Chip sein.

Das Chipauthentifizierungsverfahren kann einen Austausch und/oder eine Übertragung kryptographischer Schlüssel und/oder kryptographischer Zertifikate umfassen. Das Chipauthentifizierungsverfahren kann ausgebildet sein, die Authentizität bzw. Echtheit des integrierten Schaltkreises zu verifizieren.

Das Chip Authentication (CA) Verfahren kann beispielsweise gemäß der technischen Richtlinie BSI TR-03110 realisiert werden.

Gemäß einer Ausführungsform wird die erste Kommunikationsverbindung zu dem elektronisch auslesbaren Identifikationsdokument über ein Terminal für eine Kommunikation mit dem elektronisch auslesbaren Identifikationsdokument aufgebaut, wobei das Auslesen der elektronischen Identifikation das Durchführen eines Terminalauthentifizierungsverfahrens, beispielsweise eines Terminal Authentication Verfahrens, zur Authentifizierung des Terminals oder des Identifizierungsservers umfasst. Dadurch wird der Vorteil erreicht, dass die Authentizität bzw. Echtheit des Terminals oder des Identifizierungsservers verifiziert werden kann.

Das Terminal kann ein Lesegerät und/oder ein Tastenfeld für eine Kommunikation mit dem elektronisch auslesbaren Identifikationsdokument umfassen. Das Terminal kann, gemäß einer Ausführungsform, einen an einem Fahrzeug befestigten Kartenleser umfassen.

Das Terminalauthentifizierungsverfahren kann einen Austausch und/oder eine Übertragung kryptographischer Schlüssel und/oder kryptographischer Zertifikate umfassen. Das Terminalauthentifizierungsverfahren kann ausgebildet sein, die Authentizität bzw. Echtheit des Terminals oder des Identifizierungsservers zu verifizieren.

Das Terminal Authentication (TA) Verfahren kann beispielsweise gemäß der technischen Richtlinie BSI TR-03110 realisiert werden.

Gemäß einer Ausführungsform umfasst das Verfahren ferner ein Übertragen der ausgelesenen elektronischen Identifikation durch den Identifizierungsserver an einen Authentifizierungsserver, wobei das Vergleichen der ausgelesenen elektronischen Identifikation mit einer vorgespeicherten elektronischen Identifikation durch den Authentifizierungsserver durchgeführt wird. Dadurch wird der Vorteil erreicht, dass der Identifizierungsserver effizient implementiert werden kann.

Der Authentifizierungsserver kann ausgebildet sein, die ausgelesene elektronische Identifikation des Identifikationsdokumentes von dem Identifizierungsserver zu empfangen und die ausgelesene elektronische Identifikation mit einer vorgespeicherten elektronischen Identifikation zu vergleichen.

Das Vergleichen der ausgelesenen elektronischen Identifikation mit einer vorgespeicherten elektronischen Identifikation kann ein Bestimmen einer Übereinstimmung der ausgelesenen elektronischen Identifikation mit einer vorgespeicherten elektronischen Identifikation umfassen. Eine Übereinstimmung der ausgelesenen elektronischen Identifikation mit einer vorgespeicherten elektronischen Identifikation kann vorliegen, wenn die ausgelesene elektronische Identifikation und die vorgespeicherte elektronische Identifikation identisch sind. Das Vergleichen der ausgelesenen elektronischen Identifikation mit einer vorgespeicherten elektronischen Identifikation kann ferner ein Vergleichen der ausgelesenen elektronischen Identifikation mit einer Mehrzahl vorgespeicherter elektronischer Identifikationen umfassen, welche in einem Speicher des Authentifizierungsservers und/oder in einer Datenbank des Authentifizierungsservers abgelegt sein können.

Das Übertragen der ausgelesenen elektronischen Identifikation durch den Identifizierungsserver an einen Authentifizierungsserver kann über ein Kommunikationsnetzwerk durchgeführt werden.

Gemäß einer Ausführungsform umfasst das Verfahren ein Auslesen eines öffentlichen kryptographischen Schlüssels aus einem Speicher des Identifizierungsservers oder ein Übertragen eines öffentlichen kryptographischen Schlüssels zu dem Identifizierungsserver; und ein Übertragen des öffentlichen kryptographischen Schlüssels von dem Identifizierungsserver zu dem Identifikationsdokument. Dadurch wird der Vorteil erreicht, dass der öffentliche kryptographische Schlüssel durch das Identifikationsdokument verarbeitet und/oder ausgewertet werden kann.

Der öffentliche kryptographische Schlüssel kann Teil eines kryptographischen Schlüsselpaares sein und gemäß einer Public-Key-Infrastruktur erzeugt worden sein. Der öffentliche kryptographische Schlüssel kann beispielsweise einem Authentifizierungsserver zugeordnet sein.

Der Speicher des Identifizierungsservers kann durch eine Datenbank realisiert sein. Der Speicher des Identifizierungsservers kann ferner ausgebildet sein, eine Mehrzahl unterschiedlicher öffentlicher kryptographischer Schlüssel zu speichern.

Das Auslesen des öffentlichen kryptographischen Schlüssels aus dem Speicher des Identifizierungsservers kann einen Zugriff auf den Speicher des Identifizierungsservers umfassen. Das Auslesen des öffentlichen kryptographischen Schlüssels aus dem Speicher des Identifizierungsservers kann ferner eine Suche in dem Speicher sowie eine Extraktion des öffentlichen kryptographischen Schlüssels aus dem Speicher umfassen.

Das Übertragen des öffentlichen kryptographischen Schlüssels zu dem Identifizierungsserver kann beispielsweise von einem Authentifizierungsserver durchgeführt werden. Das Übertragen des öffentlichen kryptographischen Schlüssels zu dem Identifizierungsserver kann über ein Kommunikationsnetzwerk durchgeführt werden.

Das Übertragen des öffentlichen kryptographischen Schlüssels von dem Identifizierungsserver zu dem Identifikationsdokument kann beispielsweise über die erste Kommunikationsverbindung und die zweite Kommunikationsverbindung durchgeführt werden.

Gemäß einer Ausführungsform wird die elektronische Identifikation durch das Identifikationsdokument durch eine Verknüpfung eines privaten kryptographischen Schlüssels des Identifikationsdokumentes und des übertragenen öffentlichen kryptographischen Schlüssels erzeugt. Dadurch wird der Vorteil erreicht, dass die elektronische Identifikation charakteristisch für das Paar aus privatem kryptographischen Schlüssel des Identifikationsdokumentes und übertragenem öffentlichen kryptographischen Schlüssel ist.

Der private kryptographische Schlüssel des Identifikationsdokumentes kann Teil eines kryptographischen Schlüsselpaares sein und gemäß einer Public-Key-Infrastruktur erzeugt worden sein.

Der öffentliche kryptographische Schlüssel kann Teil eines kryptographischen Schlüsselpaares sein und gemäß einer Public-Key-Infrastruktur erzeugt worden sein. Der öffentliche kryptographische Schlüssel kann beispielsweise einem Authentifizierungsserver zugeordnet sein.

Die Verknüpfung des privaten kryptographischen Schlüssels des Identifikationsdokumentes und des öffentlichen kryptographischen Schlüssels durch das Identifikationsdokument kann beispielsweise binäre Verknüpfungen, beispielsweise ein Exklusiv-Oder, umfassen. Die Verknüpfung kann ferner durch Anwenden von kryptographischen Algorithmen, wie beispielsweise Advanced Encryption Standard (AES), und/oder durch Anwenden von Algorithmen zur Hashwertbildung, wie beispielsweise Secure Hash Algorithm (SHA), realisiert werden. Die Verknüpfung kann ferner eine Berechnung von Prüfsummen des privaten kryptographischen Schlüssels des Identifikationsdokumentes und/oder des öffentlichen kryptographischen Schlüssels umfassen.

Gemäß einer Ausführungsform umfasst das Verfahren ein Übertragen eines öffentlichen kryptographischen Schlüssels durch den Identifizierungsserver zu dem Identifikationsdokument; ein Erzeugen einer elektronischen Identifikation durch eine Verknüpfung eines privaten kryptographischen Schlüssels des Identifikationsdokumentes und des übertragenen öffentlichen kryptographischen Schlüssels durch das Identifikationsdokument; und ein Speichern der erzeugten elektronischen Identifikation, um die vorgespeicherte elektronische Identifikation zu erhalten. Dadurch wird der Vorteil erreicht, dass eine vorgespeicherte elektronische Identifikation bereitgestellt werden kann, welche dem Identifikationsdokument zugeordnet sein kann.

Der private kryptographische Schlüssel des Identifikationsdokumentes kann Teil eines kryptographischen Schlüsselpaares sein und gemäß einer Public-Key-Infrastruktur erzeugt worden sein.

Der öffentliche kryptographische Schlüssel kann Teil eines kryptographischen Schlüsselpaares sein und gemäß einer Public-Key-Infrastruktur erzeugt worden sein. Der öffentliche kryptographische Schlüssel kann beispielsweise einem Authentifizierungsserver zugeordnet sein.

Das Übertragen des öffentlichen kryptographischen Schlüssels durch den Identifizierungsserver zu dem Identifikationsdokument kann beispielsweise über die erste Kommunikationsverbindung und die zweite Kommunikationsverbindung durchgeführt werden.

Das Erzeugen der elektronischen Identifikation durch die Verknüpfung des privaten kryptographischen Schlüssels des Identifikationsdokumentes und des übertragenen öffentlichen kryptographischen Schlüssels durch das Identifikationsdokument kann ein Bereitstellen der elektronischen Identifikation umfassen. Die Verknüpfung des privaten kryptographischen Schlüssels des Identifikationsdokumentes und des öffentlichen kryptographischen Schlüssels durch das Identifikationsdokument kann beispielsweise binäre Verknüpfungen, beispielsweise ein Exklusiv-Oder, umfassen. Die Verknüpfung kann ferner durch Anwenden von kryptographischen Algorithmen, wie beispielsweise Advanced Encryption Standard (AES), und/oder durch Anwenden von Algorithmen zur Hashwertbildung, wie beispielsweise Secure Hash Algorithm (SHA), realisiert werden. Die Verknüpfung kann ferner eine Berechnung von Prüfsummen des privaten kryptographischen Schlüssels des Identifikationsdokumentes und/oder des öffentlichen kryptographischen Schlüssels umfassen.

Das Speichern der erzeugten elektronischen Identifikation kann ein Übertragen der erzeugten elektronischen Identifikation von dem Identifikationsdokument zu dem Identifizierungsserver oder zu einem Authentifizierungsserver umfassen. Das Speichern der erzeugten elektronischen Identifikation kann ferner ein Ablegen der erzeugten übertragenen elektronischen Identifikation in einen Speicher des Identifizierungsservers oder eines Authentifizierungsservers umfassen. Somit kann eine vorgespeicherte elektronische Identifikation bereitgestellt werden.

Gemäß einer Ausführungsform ist die elektronische Identifikation eine Restricted Identification des Identifikationsdokumentes. Dadurch wird der Vorteil erreicht, dass eine pseudonyme elektronische Identifikation des Identifikationsdokumentes eingesetzt werden kann.

Die Restricted Identification kann auf Grundlage eines Diffie-Hellman-Verfahrens und/oder eines Diffie-Hellman-Schlüsselaustausches durch das Identifikationsdokument erzeugt werden. Die Restricted Identification kann beispielsweise gemäß der technischen Richtlinie BSI TR-03110 realisiert werden.

Gemäß einer Ausführungsform ist das Kommunikationsgerät ein mobiles Kommunikationsgerät, beispielsweise ein Mobilcomputer, ein Mobiltelefon oder ein Smartphone. Dadurch wird der Vorteil erreicht, dass etablierte mobile Kommunikationsgeräte eingesetzt werden können. Der Mobilcomputer, das Mobiltelefon oder das Smartphone können tragbar bzw. mobil sein und können einer Person eindeutig zugeordnet sein.

Gemäß einer Ausführungsform ist das Kommunikationsgerät ein stationäres Kommunikationsgerät, das in dem Fahrzeug angeordnet sein kann. Hierbei kann das Kommunikationsgerät lösbar oder unlösbar mit einer Fahrzeugkommunikationsschnittstelle elektrisch verbunden sein.

Gemäß einer Ausführungsform ist der Identifizierungsserver ein eID-Server. Dadurch wird der Vorteil erreicht, dass ein standardisierter Identifizierungsserver eingesetzt werden kann.

Der eID-Server kann beispielsweise gemäß der technischen Richtlinie BSI TR-03130 realisiert sein und mit dem Identifikationsdokument wechselwirken.

Gemäß einem zweiten Aspekt betrifft die Erfindung ein Verfahren zum Entriegeln einer Fahrzeugverriegelungsanlage unter Verwendung eines elektronisch auslesbaren Identifikationsdokumentes, mit: Authentifizieren einer Person gemäß des Verfahrens zum Authentifizieren einer Person; und Entriegeln der Fahrzeugverriegelungsanlage bei Übereinstimmung zwischen der ausgelesenen elektronischen Identifikation und der vorgespeicherten elektronischen Identifikation. Dadurch wird der Vorteil erreicht, dass das Entriegeln einer Fahrzeugverriegelungsanlage mittels eines elektronisch auslesbaren Identifikationsdokumentes ermöglicht wird.

Die Fahrzeugverriegelungsanlage kann einen Zutritt zu einem Fahrzeug, beispielsweise einem Personenkraftwagen oder einem Lastkraftwagen, ermöglichen oder verwehren. Die Fahrzeugverriegelungsanlage kann ferner eine Sperranlage für eine Fahrzeugtür umfassen.

Das Entriegeln der Fahrzeugverriegelungsanlage kann beispielsweise eine Freigabe der Fahrzeugverriegelungsanlage umfassen.

Das Authentifizieren der Person kann gemäß des vorstehenden Verfahrens zum Authentifizieren einer Person durchgeführt werden.

Das Entriegeln der Fahrzeugverriegelungsanlage kann bei Übereinstimmung zwischen der ausgelesenen elektronischen Identifikation und der vorgespeicherten elektronischen Identifikation durchgeführt werden. Eine Übereinstimmung zwischen der ausgelesenen elektronischen Identifikation und der vorgespeicherten elektronischen Identifikation kann vorliegen, wenn die ausgelesene elektronische Identifikation und die vorgespeicherte elektronische Identifikation identisch sind.

Weitere Merkmale des Verfahrens zum Entriegeln einer Fahrzeugverriegelungsanlage ergeben sich unmittelbar aus der Funktionalität des Verfahrens zum Authentifizieren einer Person.

Gemäß einer Ausführungsform ist die Fahrzeugverriegelungsanlage in einem Fahrzeug angeordnet, wobei das Authentifizieren der Person mittels eines Kommunikationsgerätes durchgeführt wird, welches starr mit dem Fahrzeug verbunden ist. Dadurch wird der Vorteil erreicht, dass das Kommunikationsgerät dem Fahrzeug eindeutig zugeordnet werden kann.

Das Kommunikationsgerät kann beispielsweise in das Fahrzeug eingebaut sein. Das Kommunikationsgerät kann beispielsweise an oder hinter einer Scheibe und/oder an einer Säule des Fahrzeugs angeordnet sein. Das Kommunikationsgerät kann mit einer Kommunikationsschnittstelle eines Fahrzeugsicherheitssystems des Fahrzeugs verbunden sein. Das Fahrzeug kann beispielsweise ein Personenkraftwagen oder ein Lastkraftwagen sein. Das Kommunikationsgerät kann ferner ein Bestandteil einer Fahrzeug-Kommunikationsanlage und/oder einer Fahrzeug-Multimediaanlage sein.

Gemäß einer Ausführungsform ist die Fahrzeugverriegelungsanlage in einem Fahrzeug angeordnet, wobei das Fahrzeug eine Kommunikationsschnittstelle zur Kommunikation mit dem Kommunikationsgerät umfasst, wobei das Verfahren ferner ein Übermitteln einer Fahrzeugidentifikation durch die Kommunikationsschnittstelle an das Kommunikationsgerät umfasst, um das Fahrzeug zu identifizieren, und wobei die erste Kommunikationsverbindung zu dem durch die Fahrzeugidentifikation identifizierten Fahrzeug aufgebaut wird. Dadurch wird der Vorteil erreicht, dass die erste Kommunikationsverbindung effizient über das identifizierte Fahrzeug zu dem Identifikationsdokument aufgebaut werden kann.

Die Kommunikationsschnittstelle kann ausgebildet sein, mit dem Kommunikationsgerät zu kommunizieren. Die Kommunikation zwischen der Kommunikationsschnittstelle und dem Kommunikationsgerät kann über ein Kommunikationsnetzwerk durchgeführt werden. Die Kommunikation zwischen der Kommunikationsschnittstelle und dem Kommunikationsgerät kann ferner mittels einer drahtlosen Funkkommunikationsverbindung, beispielsweise einer Near Field Communication (NFC) Funkverbindung, durchgeführt werden.

Die Fahrzeugidentifikation kann durch eine Folge von Buchstaben, Ziffern, Bytes und/oder Symbolen gebildet sein. Die Fahrzeugidentifikation kann eine Angabe über das Fahrzeug, beispielsweise ein Fahrzeugkennzeichen oder eine Fahrzeugseriennummer, umfassen. Das Fahrzeug kann beispielsweise ein Personenkraftwagen oder ein Lastkraftwagen sein.

Gemäß einem dritten Aspekt betrifft die Erfindung ein Kommunikationsgerät, welches ausgebildet ist, eine erste Kommunikationsverbindung zu einem Identifikationsdokument aufzubauen; eine zweite Kommunikationsverbindung zu einem Identifizierungsserver aufzubauen; und eine elektronische Identifikation von dem Identifikationsdokument über die erste Kommunikationsverbindung und die zweite Kommunikationsverbindung an den Identifizierungsserver weiterzuleiten. Dadurch wird der Vorteil erreicht, dass das Verfahren zum Authentifizieren einer Person und das Verfahren zum Entriegeln einer Fahrzeugverriegelungsanlage effizient durchgeführt werden können.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren integrierten Schaltkreis, beispielsweise einen Radio Frequency Identification (RFID) Chip, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die elektronische Identifikation kann durch eine Folge von Buchstaben, Ziffern, Bytes und/oder Symbolen gebildet sein. Die elektronische Identifikation kann eine persönliche Angabe über eine Person, beispielsweise einen Namen, und/oder eine Kennung des Identifikationsdokumentes, beispielsweise eine Seriennummer, umfassen. Die elektronische Identifikation kann ferner durch das Identifikationsdokument erzeugt und/oder gespeichert werden.

Der Identifizierungsserver kann ausgebildet sein, die elektronische Identifikation aus dem Identifikationsdokument auszulesen. Der Identifizierungsserver kann ferner ausgebildet sein, die Echtheit des Identifikationsdokumentes zu verifizieren. Der Identifizierungsserver kann ein eID-Server bzw. ein elektronischer Identifizierungsserver sein.

Die erste Kommunikationsverbindung kann drahtgebunden und/oder drahtlos sein. Die erste Kommunikationsverbindung kann ferner über ein Kommunikationsnetzwerk aufgebaut sein. Die erste Kommunikationsverbindung kann ferner authentifiziert und/oder verschlüsselt sein.

Die zweite Kommunikationsverbindung kann drahtgebunden und/oder drahtlos sein. Die zweite Kommunikationsverbindung kann ferner über ein Kommunikationsnetzwerk aufgebaut sein. Die zweite Kommunikationsverbindung kann ferner authentifiziert und/oder verschlüsselt sein.

Das Kommunikationsnetzwerk kann durch eine Anordnung einer Mehrzahl von Servern, Clients und/oder Computern in Form eines Local Area Network (LAN), eines Wireless Local Area Network (WLAN) oder des Internet gebildet sein.

Das Weiterleiten der elektronischen Identifikation von dem Identifikationsdokument über die erste Kommunikationsverbindung und die zweite Kommunikationsverbindung an den Identifizierungsserver kann ein Zwischenspeichern der elektronischen Identifikation in einem Speicher des Kommunikationsgerätes umfassen. Das Weiterleiten der elektronischen Identifikation von dem Identifikationsdokument über die erste Kommunikationsverbindung und die zweite Kommunikationsverbindung an den Identifizierungsserver kann ferner einen Austausch und/oder eine Übertragung kryptographischer Schlüssel und/oder kryptographischer Zertifikate zwischen dem Kommunikationsgerät und dem Identifikationsdokument, zwischen dem Kommunikationsgerät und dem Identifizierungsserver und/oder zwischen dem Identifikationsdokument und dem Identifizierungsserver umfassen. Der Speicher des Kommunikationsgerätes kann durch eine elektronische Speicherbaugruppe, beispielsweise ein Random-Access-Memory (RAM), realisiert sein.

Das Verfahren zum Authentifizieren einer Person und/oder das Verfahren zum Entriegeln einer Fahrzeugverriegelungsanlage können mittels des Kommunikationsgerätes ausgeführt werden.

Weitere Merkmale des Kommunikationsgerätes ergeben sich unmittelbar aus der Funktionalität des Verfahrens zum Authentifizieren einer Person und/oder des Verfahrens zum Entriegeln einer Fahrzeugverriegelungsanlage.

Gemäß einer Ausführungsform ist das Kommunikationsgerät ausgebildet, die erste Kommunikationsverbindung zwischen dem Kommunikationsgerät und dem Identifikationsdokument mittels eines passwortauthentifizierten Verbindungsaufbauprotokolls, beispielsweise eines Password Authenticated Connection Establishment Protokolls, aufzubauen und/oder die zweite Kommunikationsverbindung zwischen dem Identifizierungsserver und dem Kommunikationsgerät mittels eines Transportschichtsicherheitsprotokolls, beispielsweise eines Transport Layer Security Protokolls, aufzubauen. Dadurch wird der Vorteil erreicht, dass authentifizierte und/oder verschlüsselte Kommunikationsverbindungen aufgebaut werden können.

Das passwortauthentifizierte Verbindungsaufbauprotokoll kann eine Eingabe eines Passwortes sowie einen Austausch und/oder eine Übertragung kryptographischer Schlüssel und/oder kryptographischer Zertifikate umfassen. Das passwortauthentifizierte Verbindungsaufbauprotokoll kann auf einem Diffie-Hellman-Schlüsselaustauschverfahren basieren. Das Passwort kann beispielsweise mittels eines Tastenfeldes des Kommunikationsgerätes eingegeben werden. Ferner kann das Passwort mittels eines Bildschirmes des Kommunikationsgerätes angezeigt werden.

Das Password Authenticated Connection Establishment (PACE) Protokoll kann beispielsweise gemäß der technischen Richtlinie BSI TR-03110 realisiert werden.

Das Transportschichtsicherheitsprotokoll kann einen Austausch und/oder eine Übertragung kryptographischer Schlüssel und/oder kryptographischer Zertifikate umfassen. Das Transportschichtsicherheitsprotokoll kann auf einem Diffie-Hellman-Schlüsselaustauschverfahren basieren.

Das Transport Layer Security (TLS) Protokoll kann beispielsweise auf den Standards IETF RFC 5246 und/oder IETF RFC 6176 basieren.

Gemäß einem vierten Aspekt betrifft die Erfindung ein Fahrzeugsicherheitssystem, das mittels eines elektronisch auslesbaren Identifikationsdokumentes einer Person deaktivierbar ist, mit: einem Terminal, welches ausgebildet ist, eine elektronische Identifikation aus dem elektronisch auslesbaren Identifikationsdokument auszulesen; einer Kommunikationsschnittstelle, welche ausgebildet ist, die ausgelesene elektronische Identifikation zur Authentifizierung der Person über eine Kommunikationsverbindung auszusenden, und ein Authentifizierungssignal zu empfangen; einer steuerbaren Fahrzeugverriegelungsanlage; und einer Steuereinrichtung, welche ausgebildet ist, die Fahrzeugverriegelungsanlage ansprechend auf den Empfang des Authentifizierungssignals zu entriegeln. Dadurch wird der Vorteil erreicht, dass das Verfahren zum Entriegeln einer Fahrzeugverriegelungsanlage effizient durchgeführt werden kann.

Das Deaktivieren des Fahrzeugsicherheitssystems kann das Entriegeln der Fahrzeugverriegelungsanlage umfassen.

Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ferner einen elektronisch auslesbaren integrierten Schaltkreis, beispielsweise einen Radio Frequency Identification (RFID) Chip, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die elektronische Identifikation kann durch eine Folge von Buchstaben, Ziffern, Bytes und/oder Symbolen gebildet sein. Die elektronische Identifikation kann eine persönliche Angabe über eine Person, beispielsweise einen Namen, und/oder eine Kennung des Identifikationsdokumentes, beispielsweise eine Seriennummer, umfassen. Die elektronische Identifikation kann ferner durch das Identifikationsdokument erzeugt und/oder gespeichert werden.

Das Terminal kann ausgebildet sein, die elektronische Identifikation aus dem elektronisch auslesbaren Identifikationsdokument auszulesen. Das Terminal kann ein Lesegerät und/oder ein Tastenfeld für eine Kommunikation mit dem elektronisch auslesbaren Identifikationsdokument umfassen.

Die Kommunikationsschnittstelle kann ausgebildet sein, die ausgelesene elektronische Identifikation zur Authentifizierung der Person über eine Kommunikationsverbindung auszusenden, und ein Authentifizierungssignal zu empfangen. Die ausgelesene elektronische Identifikation kann beispielsweise zu einem Identifizierungsserver durch die Kommunikationsschnittstelle ausgesendet werden. Das Authentifizierungssignal kann beispielsweise von einem Identifizierungsserver oder von einem Authentifizierungsserver durch die Kommunikationsschnittstelle empfangen werden.

Die Kommunikationsverbindung kann eine erste Kommunikationsverbindung zu einem Kommunikationsgerät umfassen. Die Kommunikationsverbindung kann ferner eine erste Kommunikationsverbindung und eine zweite Kommunikationsverbindung zu einem Identifizierungsserver umfassen.

Die erste Kommunikationsverbindung kann drahtgebunden und/oder drahtlos sein. Die erste Kommunikationsverbindung kann ferner über ein Kommunikationsnetzwerk aufgebaut sein. Die erste Kommunikationsverbindung kann ferner authentifiziert und/oder verschlüsselt sein.

Die zweite Kommunikationsverbindung kann drahtgebunden und/oder drahtlos sein. Die zweite Kommunikationsverbindung kann ferner über ein Kommunikationsnetzwerk aufgebaut sein. Die zweite Kommunikationsverbindung kann ferner authentifiziert und/oder verschlüsselt sein.

Das Kommunikationsnetzwerk kann durch eine Anordnung einer Mehrzahl von Servern, Clients und/oder Computern in Form eines Local Area Network (LAN), eines Wireless Local Area Network (WLAN) oder des Internet gebildet sein.

Das Kommunikationsgerät kann ausgebildet sein, die erste Kommunikationsverbindung über das Terminal zu dem Identifikationsdokument aufzubauen und die zweite Kommunikationsverbindung zu dem Identifizierungsserver aufzubauen. Das Kommunikationsgerät kann tragbar bzw. mobil sein. Das Kommunikationsgerät kann ferner ausgebildet sein, die elektronische Identifikation von dem Identifikationsdokument über die erste Kommunikationsverbindung und die zweite Kommunikationsverbindung an den Identifizierungsserver weiterzuleiten.

Der Identifizierungsserver kann ausgebildet sein, die elektronische Identifikation aus dem Identifikationsdokument auszulesen. Der Identifizierungsserver kann ferner ausgebildet sein, die Echtheit des Identifikationsdokumentes zu verifizieren. Der Identifizierungsserver kann ein eID-Server bzw. ein elektronischer Identifizierungsserver sein.

Das Authentifizierungssignal kann durch eine elektronische Nachricht, einen Befehl, ein Kommando und/oder einen Prozess gebildet sein. Das Authentifizierungssignal kann von einem Identifizierungsserver oder von einem Authentifizierungsserver erzeugt und übertragen werden.

Der Authentifizierungsserver kann ausgebildet sein, die ausgelesene elektronische Identifikation des Identifikationsdokumentes von dem Identifizierungsserver zu empfangen und die ausgelesene elektronische Identifikation mit einer vorgespeicherten elektronischen Identifikation zu vergleichen.

Das Empfangen des Authentifizierungssignals kann über die Kommunikationsverbindung durchgeführt werden.

Die steuerbare Fahrzeugverriegelungsanlage kann einen Zutritt zu einem Fahrzeug, beispielsweise einem Personenkraftwagen oder einem Lastkraftwagen, ermöglichen oder verwehren. Die steuerbare Fahrzeugverriegelungsanlage kann ferner eine Sperranlage für eine Fahrzeugtür umfassen. Die steuerbare Fahrzeugverriegelungsanlage kann ferner durch die Steuereinrichtung gesteuert werden.

Die Steuereinrichtung kann ausgebildet sein, die Fahrzeugverriegelungsanlage ansprechend auf den Empfang des Authentifizierungssignals zu entriegeln.

Das Entriegeln der Fahrzeugverriegelungsanlage kann beispielsweise eine Freigabe der Fahrzeugverriegelungsanlage umfassen.

Das Verfahren zum Entriegeln einer Fahrzeugverriegelungsanlage kann mittels des Fahrzeugsicherheitssystems ausgeführt werden.

Weitere Merkmale des Fahrzeugsicherheitssystems ergeben sich unmittelbar aus der Funktionalität des Verfahrens zum Entriegeln einer Fahrzeugverriegelungsanlage.

Gemäß einem fünften Aspekt betrifft die Erfindung ein Computerprogramm mit einem Programmcode zum Ausführen des Verfahrens zum Authentifizieren einer Person oder des Verfahrens zum Entriegeln einer Fahrzeugverriegelungsanlage, wenn der Programmcode auf einem Computer ausgeführt wird. Dadurch wird der Vorteil erreicht, dass die Verfahren automatisiert und wiederholbar ausgeführt werden können.

Der Computer kann einen Prozessor zum Ausführen des Programmcodes umfassen. Der Computer kann ferner einen Speicher sowie eine Eingabe- und Ausgabeschnittstelle umfassen. Der Programmcode kann in maschinenlesbarer Form vorliegen.

Das Verfahren zum Authentifizieren einer Person und/oder das Verfahren zum Entriegeln einer Fahrzeugverriegelungsanlage können mittels des Computerprogramms ausgeführt werden.

Weitere Merkmale des Computerprogramms ergeben sich unmittelbar aus der Funktionalität des Verfahrens zum Authentifizieren einer Person und/oder des Verfahrens zum Entriegeln einer Fahrzeugverriegelungsanlage.

Die Erfindung kann in Hardware und/oder Software realisiert werden.

Weitere Ausführungsbeispiele werden Bezug nehmend auf die beiliegenden Zeichnungen näher erläutert. Es zeigen:
- Fig. 1: ein schematisches Ablaufdiagramm eines Verfahrens zum Authentifizieren einer Person unter Verwendung eines elektronisch auslesbaren Identifikationsdokumentes;
- Fig. 2: ein schematisches Ablaufdiagramm eines Verfahrens zum Entriegeln einer Fahrzeugverriegelungsanlage unter Verwendung eines elektronisch auslesbaren Identifikationsdokumentes;
- Fig. 3: eine schematische Darstellung einer Anordnung zum Authentifizieren einer Person;
- Fig. 4: eine schematische Darstellung einer Anordnung zum Entriegeln einer Fahrzeugverriegelungsanlage; und
- Fig. 5: eine schematische Darstellung einer Anordnung zum Entriegeln einer Fahrzeugverriegelungsanlage.

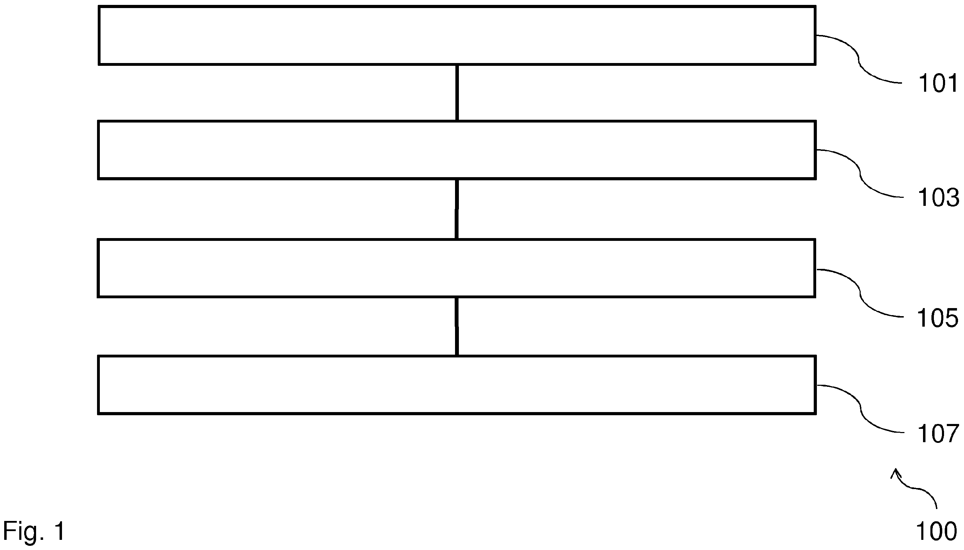

Fig. 1 zeigt ein schematisches Ablaufdiagramm eines Verfahrens 100 zum Authentifizieren einer Person unter Verwendung eines elektronisch auslesbaren Identifikationsdokumentes. Das Verfahren 100 umfasst ein Aufbauen 101 einer ersten Kommunikationsverbindung zwischen einem Kommunikationsgerät und dem Identifikationsdokument, ein Aufbauen 103 einer zweiten Kommunikationsverbindung zwischen einem Identifizierungsserver und dem Kommunikationsgerät, ein Auslesen 105 einer elektronischen Identifikation aus dem Identifikationsdokument durch den Identifizierungsserver über die erste Kommunikationsverbindung und die zweite Kommunikationsverbindung, und ein Vergleichen 107 der ausgelesenen elektronischen Identifikation mit einer vorgespeicherten elektronischen Identifikation, um die Person zu authentifizieren.

Das Aufbauen 101 der ersten Kommunikationsverbindung kann einen Austausch und/oder eine Übertragung kryptographischer Schlüssel und/oder kryptographischer Zertifikate zwischen dem Kommunikationsgerät und dem Identifikationsdokument umfassen.

Das Aufbauen 103 der zweiten Kommunikationsverbindung kann einen Austausch und/oder eine Übertragung kryptographischer Schlüssel und/oder kryptographischer Zertifikate zwischen dem Identifizierungsserver und dem Kommunikationsgerät umfassen.

Das Auslesen 105 der elektronischen Identifikation aus dem Identifikationsdokument durch den Identifizierungsserver über die erste Kommunikationsverbindung und die zweite Kommunikationsverbindung kann einen Austausch und/oder eine Übertragung von kryptographischen Schlüsseln und/oder kryptographischen Zertifikaten zwischen dem Identifikationsdokument und dem Identifizierungsserver umfassen. Ferner kann das Auslesen der elektronischen Identifikation eine Verifikation der Echtheit des Identifikationsdokumentes und/oder der elektronischen Identifikation umfassen.

Das Vergleichen 107 der ausgelesenen elektronischen Identifikation mit einer vorgespeicherten elektronischen Identifikation kann ein Bestimmen einer Übereinstimmung der ausgelesenen elektronischen Identifikation mit einer vorgespeicherten elektronischen Identifikation umfassen. Eine Übereinstimmung der ausgelesenen elektronischen Identifikation mit einer vorgespeicherten elektronischen Identifikation kann vorliegen, wenn die ausgelesene elektronische Identifikation und die vorgespeicherte elektronische Identifikation identisch sind. Das Vergleichen der ausgelesenen elektronischen Identifikation mit einer vorgespeicherten elektronischen Identifikation kann ferner ein Vergleichen der ausgelesenen elektronischen Identifikation mit einer Mehrzahl vorgespeicherter elektronischer Identifikationen umfassen, welche in einem Speicher und/oder in einer Datenbank abgelegt sein können.

Eine erfolgreiche Authentifizierung der Person kann bei Übereinstimmung zwischen der ausgelesenen elektronischen Identifikation und einer vorgespeicherten elektronischen Identifikation vorliegen.

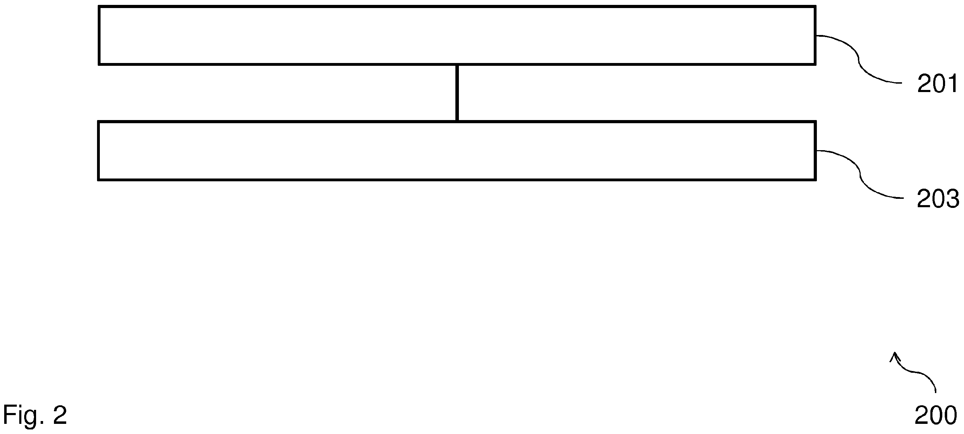

Fig. 2 zeigt ein schematisches Ablaufdiagramm eines Verfahrens 200 zum Entriegeln einer Fahrzeugverriegelungsanlage unter Verwendung eines elektronisch auslesbaren Identifikationsdokumentes. Das Verfahren 200 umfasst ein Authentifizieren 201 einer Person gemäß des Verfahrens 100 zum Authentifizieren einer Person und ein Entriegeln 203 der Fahrzeugverriegelungsanlage bei Übereinstimmung zwischen der ausgelesenen elektronischen Identifikation und der vorgespeicherten elektronischen Identifikation.

Das Authentifizieren 201 der Person kann gemäß des Verfahrens 100 zum Authentifizieren einer Person durchgeführt werden.

Das Entriegeln 203 der Fahrzeugverriegelungsanlage kann bei Übereinstimmung zwischen der ausgelesenen elektronischen Identifikation und der vorgespeicherten elektronischen Identifikation durchgeführt werden. Eine Übereinstimmung zwischen der ausgelesenen elektronischen Identifikation und der vorgespeicherten elektronischen Identifikation kann vorliegen, wenn die ausgelesene elektronische Identifikation und die vorgespeicherte elektronische Identifikation identisch sind.

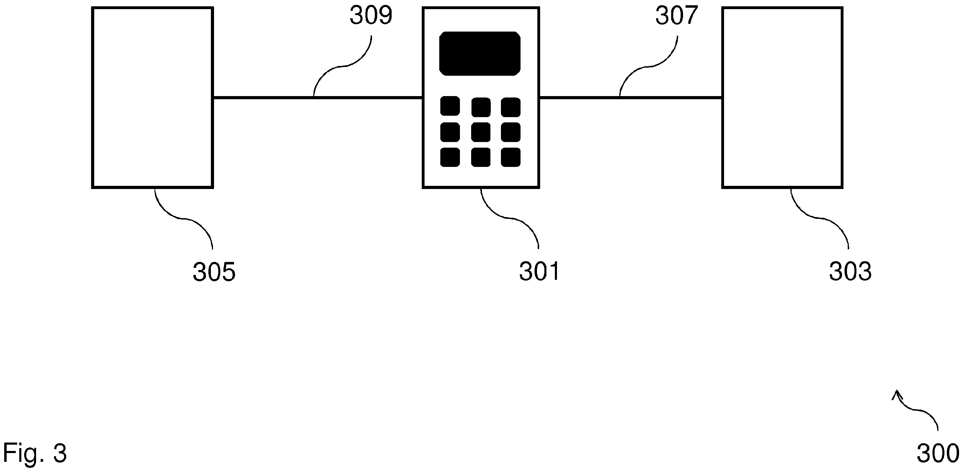

Fig. 3 zeigt eine schematische Darstellung einer Anordnung 300 zum Authentifizieren einer Person. Die Anordnung 300 umfasst ein Kommunikationsgerät 301, ein Identifikationsdokument 303, einen Identifizierungsserver 305, eine erste Kommunikationsverbindung 307 und eine zweite Kommunikationsverbindung 309.

Das Kommunikationsgerät 301 kann ausgebildet sein, die erste Kommunikationsverbindung 307 zu dem Identifikationsdokument 303 aufzubauen, die zweite Kommunikationsverbindung 309 zu dem Identifizierungsserver 305 aufzubauen, und die elektronische Identifikation von dem Identifikationsdokument 303 über die erste Kommunikationsverbindung 307 und die zweite Kommunikationsverbindung 309 an den Identifizierungsserver 305 weiterzuleiten. Das Kommunikationsgerät 301 kann tragbar bzw. mobil sein.

Das Identifikationsdokument 303 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 303 kann ferner einen elektronisch auslesbaren integrierten Schaltkreis, beispielsweise einen Radio Frequency Identification (RFID) Chip, umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Identifizierungsserver 305 kann ausgebildet sein, die elektronische Identifikation aus dem Identifikationsdokument 303 auszulesen. Der Identifizierungsserver 305 kann ferner ausgebildet sein, die Echtheit des Identifikationsdokumentes 303 zu verifizieren. Der Identifizierungsserver 305 kann ein elD-Server bzw. ein elektronischer Identifizierungsserver sein.

Die erste Kommunikationsverbindung 307 kann drahtgebunden und/oder drahtlos sein. Die erste Kommunikationsverbindung 307 kann ferner über ein Kommunikationsnetzwerk aufgebaut sein. Die erste Kommunikationsverbindung 307 kann ferner authentifiziert und/oder verschlüsselt sein.

Die zweite Kommunikationsverbindung 309 kann drahtgebunden und/oder drahtlos sein. Die zweite Kommunikationsverbindung 309 kann ferner über ein Kommunikationsnetzwerk aufgebaut sein. Die zweite Kommunikationsverbindung 309 kann ferner authentifiziert und/oder verschlüsselt sein.

Das Kommunikationsnetzwerk kann durch eine Anordnung einer Mehrzahl von Servern, Clients und/oder Computern in Form eines Local Area Network (LAN), eines Wireless Local Area Network (WLAN) oder des Internet gebildet sein.

Das Authentifizieren einer Person kann beispielsweise folgendermaßen durchgeführt werden. Das Kommunikationsgerät 301 kann die erste Kommunikationsverbindung 307 zu dem Identifikationsdokument 303 aufbauen und die zweite Kommunikationsverbindung 309 zu dem Identifizierungsserver 305 aufbauen. Der Identifizierungsserver 305 kann die elektronische Identifikation aus dem Identifikationsdokument 303 über die erste Kommunikationsverbindung 307 und die zweite Kommunikationsverbindung 309 auslesen. Die elektronische Identifikation kann von dem Kommunikationsgerät 301 weitergeleitet werden. Der Identifizierungsserver 305 kann anschließend die ausgelesene elektronische Identifikation mit einer vorgespeicherten elektronischen Identifikation vergleichen, um die Person zu authentifizieren. Die elektronische Identifikation kann alternativ von dem Identifizierungsserver 305 an einen Authentifizierungsserver übertragen werden, welcher die ausgelesene elektronische Identifikation mit einer vorgespeicherten elektronischen Identifikation vergleichen kann, um die Person zu authentifizieren. Das Übertragen der ausgelesenen elektronischen Identifikation durch den Identifizierungsserver 305 an den Authentifizierungsserver kann über ein Kommunikationsnetzwerk durchgeführt werden. Der Authentifizierungsserver ist in Fig. 3 nicht dargestellt.

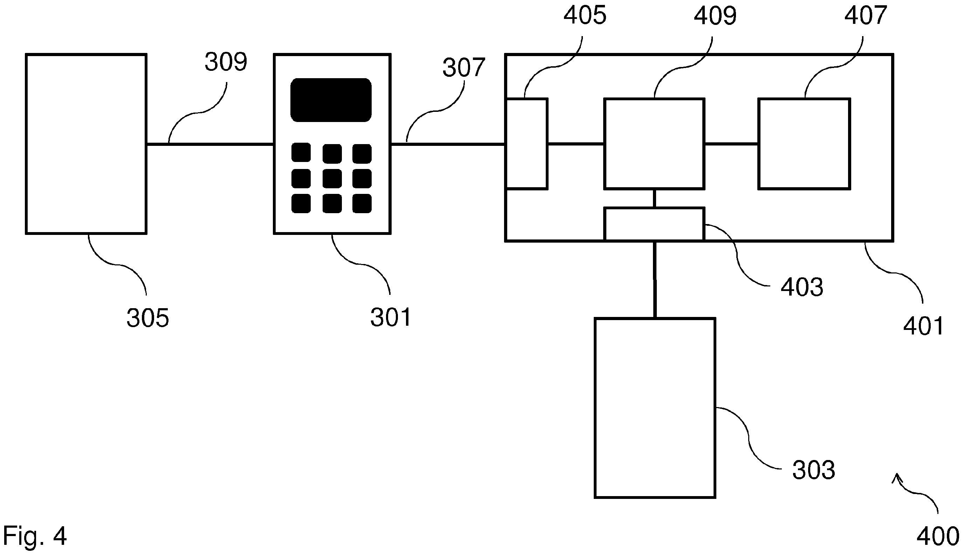

Fig. 4 zeigt eine schematische Darstellung einer Anordnung 400 zum Entriegeln einer Fahrzeugverriegelungsanlage. Die Anordnung 400 umfasst ein Kommunikationsgerät 301, ein Identifikationsdokument 303, einen Identifizierungsserver 305, eine erste Kommunikationsverbindung 307 und eine zweite Kommunikationsverbindung 309. Die Anordnung 400 umfasst ferner ein Fahrzeugsicherheitssystem 401 mit einem Terminal 403, einer Kommunikationsschnittstelle 405, einer steuerbaren Fahrzeugverriegelungsanlage 407 und einer Steuereinrichtung 409.

Das Kommunikationsgerät 301 kann ausgebildet sein, die erste Kommunikationsverbindung 307 zu dem Identifikationsdokument 303 aufzubauen, die zweite Kommunikationsverbindung 309 zu dem Identifizierungsserver 305 aufzubauen, und die elektronische Identifikation von dem Identifikationsdokument 303 über die erste Kommunikationsverbindung 307 und die zweite Kommunikationsverbindung 309 an den Identifizierungsserver 305 weiterzuleiten. Das Kommunikationsgerät 301 kann tragbar bzw. mobil sein.

Das Identifikationsdokument 303 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 303 kann ferner einen elektronisch auslesbaren integrierten Schaltkreis, beispielsweise einen Radio Frequency Identification (RFID) Chip, umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Identifizierungsserver 305 kann ausgebildet sein, die elektronische Identifikation aus dem Identifikationsdokument 303 auszulesen. Der Identifizierungsserver 305 kann ferner ausgebildet sein, die Echtheit des Identifikationsdokumentes 303 zu verifizieren. Der Identifizierungsserver 305 kann ein elD-Server bzw. ein elektronischer Identifizierungsserver sein.

Die erste Kommunikationsverbindung 307 kann drahtgebunden und/oder drahtlos sein. Die erste Kommunikationsverbindung 307 kann ferner über ein Kommunikationsnetzwerk aufgebaut sein. Die erste Kommunikationsverbindung 307 kann ferner authentifiziert und/oder verschlüsselt sein.

Die zweite Kommunikationsverbindung 309 kann drahtgebunden und/oder drahtlos sein. Die zweite Kommunikationsverbindung 309 kann ferner über ein Kommunikationsnetzwerk aufgebaut sein. Die zweite Kommunikationsverbindung 309 kann ferner authentifiziert und/oder verschlüsselt sein.

Das Kommunikationsnetzwerk kann durch eine Anordnung einer Mehrzahl von Servern, Clients und/oder Computern in Form eines Local Area Network (LAN), eines Wireless Local Area Network (WLAN) oder des Internet gebildet sein.

Das Fahrzeugsicherheitssystem 401 kann deaktivierbar sein. Das Deaktivieren des Fahrzeugsicherheitssystems 401 kann das Entriegeln der Fahrzeugverriegelungsanlage 407 umfassen.

Das Terminal 403 kann ausgebildet sein, die elektronische Identifikation aus dem elektronisch auslesbaren Identifikationsdokument 303 auszulesen. Das Terminal 403 kann ein Lesegerät und/oder ein Tastenfeld für eine Kommunikation mit dem elektronisch auslesbaren Identifikationsdokument 303 umfassen.

Die Kommunikationsschnittstelle 405 kann ausgebildet sein, die ausgelesene elektronische Identifikation zur Authentifizierung der Person über eine Kommunikationsverbindung auszusenden, und ein Authentifizierungssignal zu empfangen. Die ausgelesene elektronische Identifikation kann beispielsweise zu dem Identifizierungsserver 305 durch die Kommunikationsschnittstelle 405 ausgesendet werden. Das Authentifizierungssignal kann ferner beispielsweise von dem Identifizierungsserver 305 oder von einem Authentifizierungsserver durch die Kommunikationsschnittstelle 405 empfangen werden.

Die Kommunikationsverbindung kann die erste Kommunikationsverbindung 307 zu dem Kommunikationsgerät 301 umfassen. Die Kommunikationsverbindung kann ferner die erste Kommunikationsverbindung 307 und die zweite Kommunikationsverbindung 309 zu dem Identifizierungsserver 305 umfassen.

Das Authentifizierungssignal kann durch eine elektronische Nachricht, einen Befehl, ein Kommando und/oder einen Prozess gebildet sein. Das Authentifizierungssignal kann von dem Identifizierungsserver 305 oder von einem Authentifizierungsserver erzeugt und übertragen werden.

Der Authentifizierungsserver kann ausgebildet sein, die ausgelesene elektronische Identifikation des Identifikationsdokumentes 303 von dem Identifizierungsserver 305 zu empfangen und die ausgelesene elektronische Identifikation mit einer vorgespeicherten elektronischen Identifikation zu vergleichen.

Das Empfangen des Authentifizierungssignals kann über die Kommunikationsverbindung durchgeführt werden.

Die steuerbare Fahrzeugverriegelungsanlage 407 kann einen Zutritt zu einem Fahrzeug, beispielsweise einem Personenkraftwagen oder einem Lastkraftwagen, ermöglichen oder verwehren. Die steuerbare Fahrzeugverriegelungsanlage 407 kann ferner eine Sperranlage für eine Fahrzeugtür umfassen. Die steuerbare Fahrzeugverriegelungsanlage 407 kann ferner durch die Steuereinrichtung 409 gesteuert werden.

Die Steuereinrichtung 409 kann ausgebildet sein, die Fahrzeugverriegelungsanlage 407 ansprechend auf den Empfang des Authentifizierungssignals zu entriegeln.

Das Entriegeln der Fahrzeugverriegelungsanlage 407 kann beispielsweise eine Freigabe der Fahrzeugverriegelungsanlage 407 umfassen.

Das Entriegeln der Fahrzeugverriegelungsanlage 407 kann beispielsweise folgendermaßen durchgeführt werden. Das Kommunikationsgerät 301 kann die erste Kommunikationsverbindung 307 zu dem Identifikationsdokument 303 über die Kommunikationsschnittstelle 405, die Steuereinrichtung 409 und das Terminal 403 aufbauen und die zweite Kommunikationsverbindung 309 zu dem Identifizierungsserver 305 aufbauen. Der Identifizierungsserver 305 kann die elektronische Identifikation aus dem Identifikationsdokument 303 über die erste Kommunikationsverbindung 307 und die zweite Kommunikationsverbindung 309 auslesen. Die elektronische Identifikation kann dabei von der Kommunikationsschnittstelle 405 an den Identifizierungsserver 305 ausgesendet werden und von dem Kommunikationsgerät 301 weitergeleitet werden.

Der Identifizierungsserver 305 kann anschließend die ausgelesene elektronische Identifikation mit einer vorgespeicherten elektronischen Identifikation vergleichen, um die Person zu authentifizieren. Die elektronische Identifikation kann alternativ von dem Identifizierungsserver 305 an einen Authentifizierungsserver übertragen werden, welcher die ausgelesene elektronische Identifikation mit einer vorgespeicherten elektronischen Identifikation vergleichen kann, um die Person zu authentifizieren. Das Übertragen der ausgelesenen elektronischen Identifikation durch den Identifizierungsserver 305 an den Authentifizierungsserver kann über ein Kommunikationsnetzwerk durchgeführt werden. Der Authentifizierungsserver ist in Fig. 4 nicht dargestellt.

Der Identifizierungsserver 305 oder der Authentifizierungsserver kann daraufhin bei Übereinstimmung zwischen der ausgelesenen elektronischen Identifikation und der vorgespeicherten elektronischen Identifikation ein Authentifizierungssignal erzeugen und an das Fahrzeugsicherheitssystem 401 aussenden. Das Authentifizierungssignal kann von der Kommunikationsschnittstelle 405 empfangen werden und an die Steuereinrichtung 409 weitergeleitet werden. Ansprechend auf den Empfang des Authentifizierungssignals kann die Steuereinrichtung 409 die Fahrzeugverriegelungsanlage 407 entriegeln.

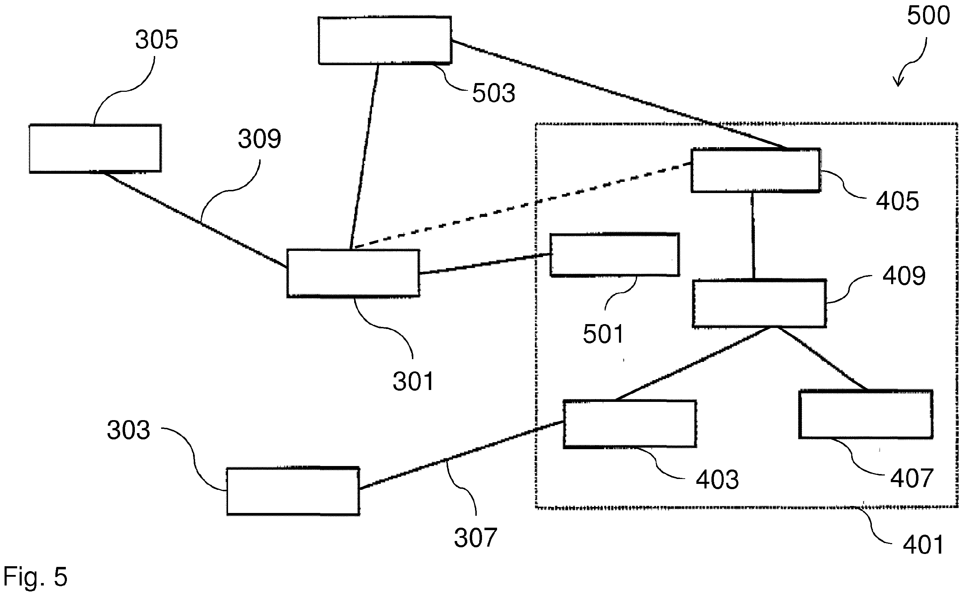

Fig. 5 zeigt eine schematische Darstellung einer Anordnung 500 zum Entriegeln einer Fahrzeugverriegelungsanlage 407. Die Anordnung 500 umfasst ein Kommunikationsgerät 301, ein Identifikationsdokument 303, einen Identifizierungsserver 305, eine erste Kommunikationsverbindung 307 und eine zweite Kommunikationsverbindung 309. Die Anordnung 500 umfasst ferner ein Fahrzeugsicherheitssystem 401 mit einem Terminal 403, einer Kommunikationsschnittstelle 405, einer Fahrzeugverriegelungsanlage 407, einer Steuereinrichtung 409 und einer weiteren Kommunikationsschnittstelle 501. Die Anordnung 500 umfasst ferner ein Kommunikationsnetzwerk 503.

Das Kommunikationsgerät 301 kann ausgebildet sein, die erste Kommunikationsverbindung 307 zu dem Identifikationsdokument 303 aufzubauen, die zweite Kommunikationsverbindung 309 zu dem Identifizierungsserver 305 aufzubauen, und die elektronische Identifikation von dem Identifikationsdokument 303 über die erste Kommunikationsverbindung 307 und die zweite Kommunikationsverbindung 309 an den Identifizierungsserver 305 weiterzuleiten. Das Kommunikationsgerät 301 kann tragbar bzw. mobil sein.

Gemäß einer Ausführungsform umfasst das Kommunikationsgerät 301 ein mobiles Kommunikationsgerät, beispielsweise ein Smartphone. Gemäß einer Ausführungsform ist das Kommunikationsgerät 301 mit einem Fahrzeug starr verbunden.

Das Identifikationsdokument 303 kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument 303 kann ferner einen elektronisch auslesbaren integrierten Schaltkreis, beispielsweise einen Radio Frequency Identification (RFID) Chip, umfassen. Das Identifikationsdokument 303 kann ein- oder mehrlagig bzw. papier- und/oder kunststoffbasiert sein. Das Identifikationsdokument 303 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Gemäß einer Ausführungsform umfasst das Identifikationsdokument 303 einen neuen Personalausweis bzw. nPA.

Der Identifizierungsserver 305 kann ausgebildet sein, die elektronische Identifikation aus dem Identifikationsdokument 303 auszulesen. Der Identifizierungsserver 305 kann ferner ausgebildet sein, die Echtheit des Identifikationsdokumentes 303 zu verifizieren. Der Identifizierungsserver 305 kann ein elD-Server bzw. ein elektronischer Identifizierungsserver sein.

Die erste Kommunikationsverbindung 307 kann drahtgebunden und/oder drahtlos sein. Die erste Kommunikationsverbindung 307 kann ferner über das Kommunikationsnetzwerk 503 aufgebaut sein. Die erste Kommunikationsverbindung 307 kann ferner authentifiziert und/oder verschlüsselt sein.

Die zweite Kommunikationsverbindung 309 kann drahtgebunden und/oder drahtlos sein. Die zweite Kommunikationsverbindung 309 kann ferner über das Kommunikationsnetzwerk 503 aufgebaut sein. Die zweite Kommunikationsverbindung 309 kann ferner authentifiziert und/oder verschlüsselt sein.

Das Fahrzeugsicherheitssystem 401 kann deaktivierbar sein. Das Deaktivieren des Fahrzeugsicherheitssystems 401 kann das Entriegeln der Fahrzeugverriegelungsanlage 407 umfassen. Gemäß einer Ausführungsform ist das Fahrzeugsicherheitssystem 401 in einem Fahrzeug angeordnet.

Das Terminal 403 kann ausgebildet sein, die elektronische Identifikation aus dem elektronisch auslesbaren Identifikationsdokument 303 auszulesen. Das Terminal 403 kann ein Lesegerät und/oder ein Tastenfeld für eine Kommunikation mit dem elektronisch auslesbaren Identifikationsdokument 303 umfassen. Gemäß einer Ausführungsform umfasst das Terminal 403 einen Kartenleser.

Die Kommunikationsschnittstelle 405 kann ausgebildet sein, die ausgelesene elektronische Identifikation zur Authentifizierung der Person über eine Kommunikationsverbindung auszusenden, und ein Authentifizierungssignal zu empfangen. Die ausgelesene elektronische Identifikation kann beispielsweise zu dem Identifizierungsserver 305 durch die Kommunikationsschnittstelle 405 ausgesendet werden. Das Authentifizierungssignal kann ferner beispielsweise von dem Identifizierungsserver 305 oder von einem Authentifizierungsserver durch die Kommunikationsschnittstelle 405 empfangen werden. Gemäß einer Ausführungsform umfasst die Kommunikationsschnittstelle 405 einen zweiten Endpunkt bzw. Endpunkt 2.

Die Kommunikationsverbindung kann die erste Kommunikationsverbindung 307 zu dem Kommunikationsgerät 301 umfassen. Die Kommunikationsverbindung kann ferner die erste Kommunikationsverbindung 307 und die zweite Kommunikationsverbindung 309 zu dem Identifizierungsserver 305 umfassen.

Das Authentifizierungssignal kann durch eine elektronische Nachricht, einen Befehl, ein Kommando und/oder einen Prozess gebildet sein. Das Authentifizierungssignal kann von dem Identifizierungsserver 305 oder von einem Authentifizierungsserver erzeugt und übertragen werden.

Der Authentifizierungsserver kann ausgebildet sein, die ausgelesene elektronische Identifikation des Identifikationsdokumentes 303 von dem Identifizierungsserver 305 zu empfangen und die ausgelesene elektronische Identifikation mit einer vorgespeicherten elektronischen Identifikation zu vergleichen.

Das Empfangen des Authentifizierungssignals kann über die Kommunikationsverbindung durchgeführt werden.

Die steuerbare Fahrzeugverriegelungsanlage 407 kann einen Zutritt zu einem Fahrzeug, beispielsweise einem Personenkraftwagen oder einem Lastkraftwagen, ermöglichen oder verwehren. Die steuerbare Fahrzeugverriegelungsanlage 407 kann ferner eine Sperranlage für eine Fahrzeugtür umfassen. Die steuerbare Fahrzeugverriegelungsanlage 407 kann ferner durch die Steuereinrichtung 409 gesteuert werden. Gemäß einer Ausführungsform umfasst die steuerbare Fahrzeugverriegelungsanlage 407 eine Zentralverriegelung bzw. ZV eines Fahrzeugs.

Die Steuereinrichtung 409 kann ausgebildet sein, die Fahrzeugverriegelungsanlage 407 ansprechend auf den Empfang des Authentifizierungssignals zu entriegeln. Gemäß einer Ausführungsform umfasst die Steuereinrichtung 409 eine Karteneinheit bzw. Card-Unit.

Das Entriegeln der Fahrzeugverriegelungsanlage 407 kann beispielsweise eine Freigabe der Fahrzeugverriegelungsanlage 407 umfassen.

Die weitere Kommunikationsschnittstelle 501 kann zur Kommunikation mit dem Kommunikationsgerät 301 ausgebildet sein. Die weitere Kommunikationsschnittstelle 501 kann ferner ausgebildet sein, eine Fahrzeugidentifikation an das Kommunikationsgerät 301 auszusenden, um das Fahrzeug zu identifizieren. Die Kommunikation zwischen der weiteren Kommunikationsschnittstelle 501 und dem Kommunikationsgerät 301 kann ferner über ein Kommunikationsnetzwerk, beispielsweise über das Kommunikationsnetzwerk 503, durchgeführt werden. Gemäß einer Ausführungsform umfasst die weitere Kommunikationsschnittstelle 501 einen ersten Endpunkt bzw. Endpunkt 1.

Das Fahrzeug kann beispielsweise ein Personenkraftwagen oder ein Lastkraftwagen sein.

Die Fahrzeugidentifikation kann durch eine Folge von Buchstaben, Ziffern, Bytes und/oder Symbolen gebildet sein. Die Fahrzeugidentifikation kann eine Angabe über das Fahrzeug, beispielsweise ein Fahrzeugkennzeichen oder eine Fahrzeugseriennummer, umfassen.

Gemäß einer Ausführungsform umfasst die Kommunikationsschnittstelle 405 die weitere Kommunikationsschnittstelle 501.

Das Kommunikationsnetzwerk 503 kann durch eine Anordnung einer Mehrzahl von Servern, Clients und/oder Computern in Form eines Local Area Network (LAN), eines Wireless Local Area Network (WLAN) oder des Internet gebildet sein. Gemäß einer Ausführungsform umfasst das Kommunikationsnetzwerk 503 ein Backend.

Das Entriegeln der Fahrzeugverriegelungsanlage 407 kann beispielsweise folgendermaßen durchgeführt werden. Die weitere Kommunikationsschnittstelle 501 kann eine Fahrzeugidentifikation an das Kommunikationsgerät 301 übertragen, um das Fahrzeug zu identifizieren. Daraufhin kann das Kommunikationsgerät 301 die erste Kommunikationsverbindung 307 zu dem durch die Fahrzeugidentifikation identifizierten Fahrzeug bzw. zu dem Identifikationsdokument 303 über die Kommunikationsschnittstelle 405, die Steuereinrichtung 409 und das Terminal 403 aufbauen. Das Kommunikationsgerät 301 kann ferner die zweite Kommunikationsverbindung 309 zu dem Identifizierungsserver 305 aufbauen.

Der Identifizierungsserver 305 kann die elektronische Identifikation aus dem Identifikationsdokument 303 über die erste Kommunikationsverbindung 307 und die zweite Kommunikationsverbindung 309 auslesen. Die elektronische Identifikation kann dabei von der Kommunikationsschnittstelle 405 an den Identifizierungsserver 305 ausgesendet werden und von dem Kommunikationsgerät 301 weitergeleitet werden.

Der Identifizierungsserver 305 kann anschließend die ausgelesene elektronische Identifikation mit einer vorgespeicherten elektronischen Identifikation vergleichen, um die Person zu authentifizieren. Die elektronische Identifikation kann alternativ von dem Identifizierungsserver 305 an einen Authentifizierungsserver übertragen werden, welcher die ausgelesene elektronische Identifikation mit einer vorgespeicherten elektronischen Identifikation vergleichen kann, um die Person zu authentifizieren. Das Übertragen der ausgelesenen elektronischen Identifikation durch den Identifizierungsserver 305 an den Authentifizierungsserver kann über ein Kommunikationsnetzwerk, beispielsweise über das Kommunikationsnetzwerk 503, durchgeführt werden. Der Authentifizierungsserver ist in Fig. 5 nicht dargestellt.

Der Identifizierungsserver 305 oder der Authentifizierungsserver kann daraufhin bei Übereinstimmung zwischen der ausgelesenen elektronischen Identifikation und der vorgespeicherten elektronischen Identifikation ein Authentifizierungssignal erzeugen und an das Fahrzeugsicherheitssystem 401 aussenden. Das Authentifizierungssignal kann von der Kommunikationsschnittstelle 405 empfangen werden und an die Steuereinrichtung 409 weitergeleitet werden. Ansprechend auf den Empfang des Authentifizierungssignals kann die Steuereinrichtung 409 die Fahrzeugverriegelungsanlage 407 entriegeln.

Gemäß einer Ausführungsform sind der Identifizierungsserver 305 und/oder ein Authentifizierungsserver innerhalb des Fahrzeugs angeordnet.

Gemäß einer Ausführungsform befindet sich ein Berechtigungszertifikat zum Auslesen des Identifikationsdokumentes oder des Ausweises innerhalb des Fahrzeugs. Somit kann auf einen externen oder extra Identifizierungsserver verzichtet werden, um die elektronische Identifikation oder die Attribute aus dem Identifikationsdokument oder dem Ausweis auszulesen. Ein Vergleichen oder eine Überprüfung der ausgelesenen elektronischen Identifikation oder des ausgelesenen Identifizierers kann dann beispielsweise bei einem Authentifizierungsserver oder, um eine weitere Geschwindigkeitssteigerung zu erzielen, direkt im Fahrzeug durchgeführt oder vorgenommen werden.

Gemäß einer Ausführungsform betrifft die Erfindung eine Fahrzeugverriegelungsanlage bzw. eine Zentralverrieglung für Fahrzeuge, beispielsweise Personenkraftwagen bzw. PKW, welche mittels eines Identifikationsdokumentes, beispielweise eines neuen Personalausweises bzw. nPA, entriegelt werden kann.

Gemäß einer Ausführungsform wird eine elektronische Identifikationsfunktion bzw. elD-Funktion eines Identifikationsdokumentes, beispielsweise eines neuen Personalausweises, zum Entriegeln einer Fahrzeugverriegelungsanlage bzw. zum Aufschließen eines Autos verwendet.

Gemäß einer Ausführungsform kann ein Password Authenticated Connection Establishment (PACE) Protokoll mit einem Identifikationsdokument, beispielsweise einem neuen Personalausweis bzw. nPA, und einem Kommunikationsgerät, beispielsweise einem Smartphone, durchgeführt werden.

Gemäß einer Ausführungsform erfolgt das Entriegeln der Fahrzeugverriegelungsanlage folgendermaßen. Der Benutzer verwendet ein Kommunikationsgerät, beispielsweise ein Smartphone, welches über eine Kommunikationsverbindung, beispielsweise einen ersten Kanal, eine Fahrzeugidentifikation bzw. Identifikation (ID) des Fahrzeugs abrufen kann. Dies kann beispielsweise mittels eines Quick-Response (QR) Codes oder Near Field Communication (NFC) erfolgen.

Mittels der Fahrzeugidentifikation bzw. Identifikation (ID) des Fahrzeugs kann das Kommunikationsgerät, beispielsweise das Smartphone, eine Kommunikationsverbindung, beispielsweise einen zweiten Kanal oder eine weitere Verbindung, zu dem Fahrzeug oder dem Fahrzeugsicherheitssystem herstellen. Diese Verbindung kann direkt, beispielsweise mittels einer Bluetooth Funkverbindung oder einer Wireless Local Area Network (WLAN) bzw. WiFi Funkverbindung, oder indirekt über ein Kommunikationsnetzwerk oder einen Server bestehen. Das Fahrzeug kann eine Verbindung zu einem Kommunikationsnetzwerk und/oder zu einem Identifizierungsserver bzw. Hintergrundsystem besitzen.

Der Benutzer kann ein Identifikationsdokument, beispielsweise einen neuen Personalausweis bzw. nPA, auf ein Terminal bzw. einen Kartenleser des Fahrzeugs oder Fahrzeugsicherheitssystems legen. Das Kommunikationsgerät, beispielsweise das Smartphone, kann nun über die zuvor aufgebaute Verbindung und über das Terminal bzw. den Kartenleser mit dem Identifikationsdokument, beispielsweise dem neuen Personalausweis bzw. nPA, kommunizieren.

Der Benutzter kann eine persönliche Identifikationsnummer (PIN) bzw. eine Ausweis-PIN des Identifikationsdokumentes in das Kommunikationsgerät, beispielsweise das Smartphone, eingeben, woraufhin ein Password Authenticated Connection Establishment (PACE) Tunnel zwischen dem Kommunikationsgerät, beispielsweise dem Smartphone, und dem Identifikationsdokument, beispielsweise dem neuen Personalausweis bzw. nPA, aufgebaut werden kann.

Anschließend können der Identifizierungsserver bzw. das Hintergrundsystem und das Identifikationsdokument, beispielsweise der neue Personalausweis bzw. nPA, über das Kommunikationsgerät, beispielsweise das Smartphone, eine Terminal Authentication (TA) und/oder eine Chip Authentication (CA) durchführen.

Der Identifizierungsserver bzw. das Hintergrundsystem kann die angeforderten Daten, beispielsweise die elektronische Identifikation, aus dem Identifikationsdokument bzw. Ausweis auslesen, den Benutzer authentifizieren und ein Authentifizierungssignal bzw. ein Öffnen-Signal an das Fahrzeug bzw. das Fahrzeugsicherheitssystem senden.

Gemäß einer Ausführungsform ermöglicht die Erfindung eine Nutzung einer Zweifaktor-Authentisierung des Benutzers und/oder eine Nutzung eines breit verfügbaren ID-Tokens.

Gemäß einer Ausführungsform ist die Kommunikationsschnittstelle ausgebildet, mit dem Kommunikationsgerät drahtlos zu kommunizieren.

Gemäß einer Ausführungsform ist die Kommunikationsschnittstelle elektrisch und drahtgebunden mit dem Kommunikationsgerät verbindbar oder verbunden. In diesem Fall kann das Fahrzeug selbst als Kommunikationsgerät verwendet werden. Hierbei kann eine induktive und/oder kapazitive Tastatur, eine RFID-Spule sowie ein Display bzw. Bildschirm des Kommunikationsgerätes an oder hinter einer Scheibe des Fahrzeugs, beispielsweise zwischen einer B-Säule und einer C-Säule des Fahrzeugs, im Fahrzeug vorgesehen sein.

Gemäß einer Ausführungsform ist das mit dem Fahrzeug starr verbundene Kommunikationsgerät aufgrund der Mobilität des freizuschaltenden oder zu entriegelnden Fahrzeugs ein mobiles Kommunikationsgerät.

Gemäß einer Ausführungsform ist das freizuschaltende oder zu entriegelnde Fahrzeug mit dem Kommunikationsgerät starr verbunden.

### BEZUGSZEICHENLISTE

- 100: Verfahren zum Authentifizieren einer Person
- 101: Aufbauen einer ersten Kommunikationsverbindung
- 103: Aufbauen einer zweiten Kommunikationsverbindung
- 105: Auslesen einer elektronischen Identifikation
- 107: Vergleichen der ausgelesenen elektronischen Identifikation

- 200: Verfahren zum Entriegeln einer Fahrzeugverriegelungsanlage
- 201: Authentifizieren einer Person
- 203: Entriegeln der Fahrzeugverriegelungsanlage

- 300: Anordnung zum Authentifizieren einer Person
- 301: Kommunikationsgerät
- 303: Identifikationsdokument
- 305: Identifizierungsserver
- 307: Erste Kommunikationsverbindung
- 309: Zweite Kommunikationsverbindung

- 400: Anordnung zum Entriegeln einer Fahrzeugverriegelungsanlage
- 401: Fahrzeugsicherheitssystem
- 403: Terminal
- 405: Kommunikationsschnittstelle
- 407: Fahrzeugverriegelungsanlage
- 409: Steuereinrichtung

- 500: Anordnung zum Entriegeln einer Fahrzeugverriegelungsanlage
- 501: Weitere Kommunikationsschnittstelle
- 503: Kommunikationsnetzwerk

## Patentansprüche

1. Verfahren (200) zum Entriegeln (203) einer Fahrzeugverriegelungsanlage (407) unter Verwendung eines elektronisch auslesbaren Identifikationsdokumentes (303), mit:
Authentifizieren (201) einer Person gemäß einem Verfahren (100) zum Authentifizieren einer Person unter Verwendung eines elektronisch auslesbaren Identifikationsdokumentes (303), wobei das Verfahren (100) zum Authentifizieren einer Person ein
Aufbauen (101) einer ersten Kommunikationsverbindung (307) zwischen einem Kommunikationsgerät (301) und dem Identifikationsdokument (303); ein
Aufbauen (103) einer zweiten Kommunikationsverbindung (309) zwischen einem Identifizierungsserver (305) und dem Kommunikationsgerät (301); ein
Auslesen (105) einer elektronischen Identifikation aus dem Identifikationsdokument (303) durch den Identifizierungsserver (305) über die erste Kommunikationsverbindung (307) und die zweite Kommunikationsverbindung (309); und ein
Vergleichen (107) der ausgelesenen elektronischen Identifikation mit einer vorgespeicherten elektronischen Identifikation umfasst, um die Person zu authentifizieren;
wobei das Verfahren (200) zum Entriegeln (203) einer Fahrzeugverriegelungsanlage (407) ein Entriegeln (203) der Fahrzeugverriegelungsanlage (407) bei Übereinstimmung zwischen der ausgelesenen elektronischen Identifikation und der vorgespeicherten elektronischen Identifikation umfasst;
wobei die Fahrzeugverriegelungsanlage (407) in einem Fahrzeug angeordnet ist, wobei das Fahrzeug eine Kommunikationsschnittstelle zur Kommunikation mit dem Kommunikationsgerät (301) umfasst;
wobei die erste Kommunikationsverbindung (307) zu dem elektronisch auslesbaren Identifikationsdokument (303) über ein Terminal (403) für eine Kommunikation mit dem elektronisch auslesbaren Identifikationsdokument (303) aufgebaut wird, und wobei das Auslesen (105) der elektronischen Identifikation das Durchführen eines Terminalauthentifizierungsverfahrens, insbesondere eines Terminal Authentication Verfahrens, zur Authentifizierung des Terminals (403) oder des Identifizierungsservers (305) umfasst;
wobei das Terminal (403) einen an dem Fahrzeug befestigten Kartenleser umfasst;
wobei das Kommunikationsgerät (301) ein mobiles Kommunikationsgerät ist;
wobei der Identifizierungsserver und das Identifikationsdokument (303) das Terminalauthentifizierungsverfahren und ein Chipauthentifizierungsverfahren über das Kommunikationsgerät (301) durchführen.

2. Verfahren (200) nach Anspruch 1, wobei das Aufbauen (103) der zweiten Kommunikationsverbindung (309) zwischen dem Identifizierungsserver (305) und dem Kommunikationsgerät (301) über eine drahtlose Funkkommunikationsverbindung, insbesondere eine Global System for Mobile Communications Mobilfunkverbindung oder eine Universal Mobile Telecommunications System Mobilfunkverbindung oder eine Long Term Evolution Mobilfunkverbindung, durchgeführt wird.

3. Verfahren (200) nach einem der vorstehenden Ansprüche, wobei das Verfahren (100) ferner ein Übertragen der ausgelesenen elektronischen Identifikation durch den Identifizierungsserver (305) an einen Authentifizierungsserver umfasst und wobei das Vergleichen (107) der ausgelesenen elektronischen Identifikation mit einer vorgespeicherten elektronischen Identifikation durch den Authentifizierungsserver durchgeführt wird.

4. Verfahren (200) nach einem der vorstehenden Ansprüche, mit:
Übertragen eines öffentlichen kryptographischen Schlüssels durch den Identifizierungsserver (305) zu dem Identifikationsdokument (303);
Erzeugen einer elektronischen Identifikation durch eine Verknüpfung eines privaten kryptographischen Schlüssels des Identifikationsdokumentes (303) und des übertragenen öffentlichen kryptographischen Schlüssels durch das Identifikationsdokument (303); und
Speichern der erzeugten elektronischen Identifikation, um die vorgespeicherte elektronische Identifikation zu erhalten.

5. Verfahren (200) nach einem der vorstehenden Ansprüche, wobei die elektronische Identifikation eine Restricted Identification des Identifikationsdokumentes (303) ist.

6. Verfahren (200) nach einem der vorstehenden Ansprüche, wobei der Identifizierungsserver (305) ein eID-Server ist.

7. Fahrzeugsicherheitssystem (401) für ein Fahrzeug, wobei das Fahrzeugsicherheitssystem (401) mittels eines elektronisch auslesbaren Identifikationsdokumentes (303) einer Person und eines mobilen Kommunikationsgerätes (301) entriegelbar ist, mit:
einem Terminal (403) zur Kommunikation mit dem elektronisch auslesbaren Identifikationsdokument (303), wobei das Terminal (403) einen an dem Fahrzeug befestigten Kartenleser umfasst, wobei das Terminal (403) ausgebildet ist, eine elektronische Identifikation aus dem elektronisch auslesbaren Identifikationsdokument (303) auszulesen, wobei das Auslesen der elektronischen Identifikation das Durchführen eines Terminalauthentifizierungsverfahrens, insbesondere eines Terminal Authentication Verfahrens, zur Authentifizierung des Terminals (403) oder eines Identifizierungsservers (305) umfasst;
einer Kommunikationsschnittstelle (405) zur Kommunikation mit dem mobilen Kommunikationsgerät (301), wobei die Kommunikationsschnittstelle (405) ausgebildet ist, die ausgelesene elektronische Identifikation zur Authentifizierung der Person über eine Kommunikationsverbindung über das mobile Kommunikationsgerät (301) an einen Identifizierungsserver (305) auszusenden, und ein von einem Authentifizierungsserver erzeugtes Authentifizierungssignal zu empfangen;
einer steuerbaren Fahrzeugverriegelungsanlage (407), welche in dem Fahrzeug angeordnet ist; und
einer Steuereinrichtung (409), welche ausgebildet ist, die Fahrzeugverriegelungsanlage (407) ansprechend auf den Empfang des Authentifizierungssignals zu entriegeln.

8. Computerprogramm mit einem Programmcode zum Ausführen des Verfahrens (100, 200) nach einem der Ansprüche 1 bis 6, wenn der Programmcode auf einem Computer ausgeführt wird.

## Claims

1. Method (200) for unlocking (203) a vehicle locking system (407) using an electronically readable identification document (303), which method comprises:
authenticating (201) a person in accordance with a method (100) for authenticating a person using an electronically readable identification document (303), wherein the method (100) for authenticating a person comprises
establishing (101) a first communication connection (307) between a communication device (301) and the identification document (303);
establishing (103) a second communication connection (309) between an identification server (305) and the communication device (301);
reading (105) an electronic identification from the identification document (303), this being carried out by the identification server (305) via the first communication connection (307) and the second communication connection (309); and
comparing (107) the read electronic identification with a pre-stored electronic identification in order to authenticate the person;
wherein the method (200) for unlocking (203) a vehicle locking system (407) comprises unlocking (203) the vehicle locking system (407) if the read electronic identification and the pre-stored electronic identification match;
wherein the vehicle locking system (407) is arranged in a vehicle, the vehicle comprising a communication interface for communication with the communication device (301);
wherein the first communication connection (307) to the electronically readable identification document (303) is established via a terminal (403) for communication with the electronically readable identification document (303), and wherein the reading (105) of the electronic identification comprises carrying out a terminal authentication method in order to authenticate the terminal (403) or the identification server (305);
wherein the terminal (403) comprises a card reader that is attached to the vehicle;
wherein the communication device (301) is a mobile communication device;
wherein the identification server and the identification document (303) carry out the terminal authentication method and a chip authentication method via the communication device (301).

2. Method (200) according to claim 1, wherein establishing (103) the second communication connection (309) between the identification server (305) and the communication device (301) is carried out via a wireless radio communication connection, in particular a Global System for Mobile Communications mobile telephony connection or a Universal Mobile Telecommunications System mobile telephony connection or a Long-Term Evolution mobile telephony connection.

3. Method (200) according to one of the preceding claims, wherein the method (100) further comprises transmitting the read electronic identification to an authentication server, this being carried out by the identification server (305), and wherein the comparing (107) of the read electronic identification with a pre-stored electronic identification is carried out by the authentication server.

4. Method (200) according to one of the preceding claims, which comprises:
transmitting a public cryptographic key to the identification document (303), this being carried out by the identification server (305);
generating an electronic identification by linking a private cryptographic key of the identification document (303) and the transmitted public cryptographic key, this being carried out by the identification document (303); and
storing the generated electronic identification in order to obtain the pre-stored electronic identification.

5. Method (200) according to one of the preceding claims, wherein the electronic identification is a Restricted Identification of the identification document (303).

6. Method (200) according to one of the preceding claims, wherein the identification server (305) is an eID server.

7. Vehicle security system (401) for a vehicle, wherein the vehicle security system (401) is unlockable by means of an electronically readable identification document (303) of a person and a mobile communication device (301), said vehicle security system comprising:
a terminal (403) for communication with the electronically readable identification document (303), wherein the terminal (403) comprises a card reader that is attached to the vehicle, wherein the terminal (403) is configured to read an electronic identification from the electronically readable identification document (303), wherein the reading of the electronic identification comprises carrying out a terminal authentication method in order to authenticate the terminal (403) or an identification server (305);
a communication interface (405) for communication with the mobile communication device (301), wherein the communication interface (405) is configured to send the read electronic identification for authenticating the person over a communication connection via the mobile communication device (301) to an identification server (305) and to receive an authentication signal that is generated by an authentication server;
a controllable vehicle locking system (407) which is arranged in the vehicle; and
a control device (409) which is configured to unlock the vehicle locking system (407) in response to receiving the authentication signal.

8. Computer program comprising a program code for executing the method (100, 200) according to one of claims 1 to 6 when the program code is run on a computer.

## Revendications

1. Procédé (200) de déverrouillage (203) d'une installation de verrouillage de véhicule (407) au moyen d'un document d'identification (303) lisible par voie électronique, comprenant :
l'authentification (201) d'une personne conformément à un procédé (100) d'authentification d'une personne au moyen d'un document d'identification (303) lisible par voie électronique, ledit procédé (100) d'authentification d'une personne comprenant
l'établissement (101) d'une première liaison de communication (307) entre un appareil de communication (301) et le document d'identification (303) ;
l'établissement (103) d'une deuxième liaison de communication (309) entre un serveur d'identification (305) et l'appareil de communication (301) ;
l'extraction (105) d'une identification électronique du document d'identification (303) par le serveur d'identification (305) au moyen de la première liaison de communication (307) et de la deuxième liaison de communication (309) ; et
la comparaison (107) de l'identification électronique extraite avec une identification électronique préalablement mémorisée afin d'authentifier la personne ;
ledit procédé (200) de déverrouillage (203) d'une installation de verrouillage de véhicule (407) comprenant le déverrouillage (203) de l'installation de verrouillage de véhicule (407) en cas de concordance entre l'identification électronique extraite et l'identification électronique préalablement mémorisée ;
l'installation de verrouillage de véhicule (407) étant disposée dans un véhicule, ledit véhicule comprenant une interface de communication permettant de communiquer avec l'appareil de communication (301) ;
la première liaison de communication (307) au document d'identification (303) lisible par voie électronique étant établie au moyen d'un terminal (403) pour une communication avec le document d'identification (303) lisible par voie électronique, et l'extraction (105) de l'identification électronique comprenant l'exécution d'un procédé d'authentification de terminal, en particulier d'un procédé Terminal Authentication, pour l'authentification du terminal (403) ou du serveur d'identification (305) ;
le terminal (403) comprenant un lecteur de carte fixé dans le véhicule ;
l'appareil de communication (301) étant un appareil de communication mobile ;
le serveur d'identification et le document d'identification (303) exécutant le procédé d'authentification de terminal et un procédé d'authentification de puce au moyen de l'appareil de communication (301).

2. Procédé (200) selon la revendication 1, où l'établissement (103) de la deuxième liaison de communication (309) entre le serveur d'identification (305) et l'appareil de communication (301) est réalisé via une liaison de communication radio sans fil, en particulier une liaison de téléphonie mobile Global System for Mobile Communications ou une liaison de téléphonie mobile Universal Mobile Télécommunications System ou une liaison de téléphonie mobile Long Term Evolution.

3. Procédé (200) selon l'une des revendications précédentes, où ledit procédé (100) comprend en outre la transmission de l'identification électronique extraite par le serveur d'identification (305) à un serveur d'authentification, et où la comparaison (107) de l'identification électronique extraite avec une identification électronique préalablement mémorisée est effectuée par le serveur d'authentification.

4. Procédé (200) selon l'une des revendications précédentes, comprenant :
la transmission par le serveur d'identification (305) d'une clé cryptographique publique au document d'identification (303) ;
la génération d'une identification électronique par corrélation d'une clé cryptographique privée du document d'identification (303) et de la clé cryptographique publique transmise par le document d'identification (303) ; et
la mémorisation de l'identification électronique générée afin d'obtenir l'identification électronique préalablement mémorisée.

5. Procédé (200) selon l'une des revendications précédentes, où l'identification électronique est une identification restreinte du document d'identification (303).

6. Procédé (200) selon l'une des revendications précédentes, où le serveur d'identification (305) est un serveur elD.

7. Système de sécurité (401) pour un véhicule, ledit système de sécurité de véhicule (401) étant déverrouillable au moyen d'un document d'identification (303) d'une personne lisible par voie électronique et d'un appareil de communication mobile (301), comprenant :
un terminal (403) pour la communication avec le document d'identification (303) lisible par voie électronique, le terminal (403) comprenant un lecteur de carte fixé dans le véhicule, le terminal (403) étant prévu pour extraire une identification électronique du document d'identification (303) lisible par voie électronique, l'extraction de l'identification électronique comprenant l'exécution d'un procédé d'authentification de terminal, en particulier d'un procédé Terminal Authentication, pour l'authentification du terminal (403) ou d'un serveur d'identification (305) ;
une interface de communication (405) pour la communication avec l'appareil de communication mobile (301), l'interface de communication (405) étant prévue pour adresser à un serveur d'identification (305) l'identification électronique extraite pour l'authentification de la personne par une liaison de communication via l'appareil de communication mobile (301), et pour recevoir un signal d'authentification généré par un serveur d'authentification ;
une installation de verrouillage de véhicule (407) pouvant être commandée, disposée dans le véhicule ; et
un dispositif de commande (409), prévu pour déverrouiller l'installation de verrouillage de véhicule (407) en réaction à la réception du signal d'authentification.

8. Programme informatique comprenant un code de programme pour l'exécution du procédé (100, 200) selon l'une des revendications 1 à 6 quand le code de programme est exécuté sur un ordinateur.
